(19) Europäisches Patentamt
European Patent Office
Office européen des brevets

(11) EP 2 309 291 A1

(12) EUROPEAN PATENT APPLICATION
published in accordance with Art. 153(4) EPC

(43) Date of publication:
13.04.2011 Bulletin 2011/15

(21) Application number: 09797687.2

(22) Date of filing: 14.07.2009

(51) Int Cl.:
*G02B 5/30* (2006.01) *C09K 19/38* (2006.01)
*C09K 19/54* (2006.01) *G02F 1/1335* (2006.01)
*G02F 1/13363* (2006.01)

(86) International application number:
PCT/JP2009/003289

(87) International publication number:
WO 2010/007758 (21.01.2010 Gazette 2010/03)

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 14.07.2008 JP 2008182495
09.01.2009 JP 2009003327
09.01.2009 JP 2009003328
23.03.2009 JP 2009069748

(71) Applicant: FUJIFILM Corporation
Tokyo 106-0031 (JP)

(72) Inventors:
- KIMURA, Masaomi
Minami-ashigara-shi
Kanagawa 250-0193 (JP)
- WATANABE, Hidetoshi
Minami-ashigara-shi
Kanagawa 250-0193 (JP)
- AIKI, Yasuhiro
Minami-ashigara-shi
Kanagawa 250-0193 (JP)
- AMIMORI, Ichiro
Minami-ashigara-shi
Kanagawa 250-0193 (JP)
- MORISHIMA, Shinichi
Minami-ashigara-shi
Kanagawa 250-0193 (JP)

(74) Representative: HOFFMANN EITLE
Patent- und Rechtsanwälte
Arabellastraße 4
81925 München (DE)

# (54) OPTICAL ANISOTROPIC FILM, PROCESS FOR PRODUCING OPTICAL ANISOTROPIC FILM, SUBSTRATE FOR LIQUID CRYSTAL CELL, AND LIQUID CRYSTAL DISPLAY DEVICE

(57) A novel optically anisotropic film useful for optical compensation of a liquid crystal display device is provided. The optically anisotropic film has a distorted twisted spiral structure, which is formed from a liquid-crystalline composition comprising a liquid-crystalline compound and at least one optically active compound the torsional force of which is changed by light. The optically anisotropic film is produced, for example by (1) heating a liquid-crystalline composition to temperature $T_1$; and (2) irradiating the liquid-crystalline composition with polarized light at temperature $T_2$, provided $T_{NI} < T_1 < 150°C$ (XI) and $T_{CN} < T_2 < T_{NI}$ (XII), wherein $T_{NI}$ is the temperature at which the liquid-crystalline composition phase transitions from a cholesteric phase to an isotropic phase, and $T_{CN}$ is the temperature at which the liquid-crystalline composition phase transitions from a crystal phase to a cholesteric phase.

[Fig.1]

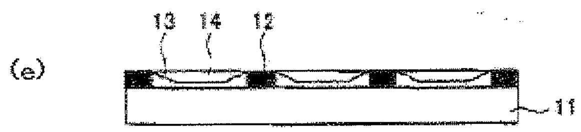


EP 2 309 291 A1

## Description

TECHNICAL FIELD

The present invention relates to an optically anisotropic film, a process for producing the optically anisotropic film, a substrate for liquid crystal cell having the optically anisotropic film, and a liquids crystal display device.

There have been proposed liquid crystal display devices employing various modes. Among them, VA (vertically aligned) mode is a wide viewing angle mode having wide contrast viewing angle characteristics in all directions. Liquid crystal display devices employing such a mode have already become popular for a screen of a TV set, and recently applied for a wide screen of over 30 inches. In order to reduce light leakage and color shifts that generate in the oblique direction in the black state, optically anisotropic films having various properties are used for optical compensation.

As an optical compensation film that contributes to reducing viewing angle dependence of color of a liquid crystal display device of VA mode, for example, a compensation plate that satisfies a certain optical characteristics has been proposed, and a modified polycarbonate is used as the materials (Patent Document 1).

In addition, it is proposed that a biaxial film of deformed twisted spiral structure or a biaxial film of a uniform spiral structure is used for the optical compensation of a liquid crystal display device (Patent Documents 2 and 3). In particular, although it can be produced to have a sufficient in-plane retardation, the biaxial film of deformed twisted spiral structure that is disclosed in Patent Document 2 needs UV irradiation under nitrogen atmosphere in its production, causing burden in the production process. The biaxial film of a uniform spiral structure that is disclosed in Patent Document 3 is produced through a polarized light irradiation after non-polarized light irradiation. Therefore, the matrix is cured by the first non-polarized light irradiation, and the subsequent polarized light irradiation produces poor in-plane retardation.

Patent Document 1 Japanese Unexamined Patent Publication (KOKAI) No. 2004-37837

Patent Document 2 Published Japanese Translation of PCT International Publication (WO2006/002765) for Patent Application (KOHYO) No. 2008-505369

Patent Document 3 Published Japanese Translation of PCT International Publication (WO2006/002766) for Patent Application (KOHYO) No. 2008-505370

The object of the present invention is to provide a novel optically anisotropic film useful for optical compensation of a liquid crystal display device and a method for readily producing an optically anisotropic film that is useful for optical compensation of a liquid crystal display device. Further, the object of the present invention is to provide a liquid crystal cell and a liquid crystal display device using the above optically anisotropic film.

[1] An optically anisotropic film of distorted twisted spiral structure, which is formed by irradiation with polarized light to a liquid-crystalline composition according to any one of [21] to [30].

[2] The optically anisotropic film according to [1], **characterized in that** an in-plane slow axis is present in the direction parallel to the polarized light irradiated.

[3] The optically anisotropic film according to [1] or [2], characterized by having a reflection wavelength of less than 400 nm and essential transparency to light with wavelengths of 380 to 780 nm.

[14] A liquid crystal cell substrate, which comprises a substrate and the optically anisotropic film according to any one of [1] to [3] on the substrate.

[15] A liquid crystal display device comprising the optically anisotropic film according to any one of [1] to [3].

[16] The liquid crystal display device according to [15], which is a VA-mode liquid crystal display device.

[17] The liquid crystal display device according to [15] or [16], which comprises the optically anisotropic film in the liquid crystal cell.

[18] The liquid crystal display device according to [17], wherein the optically anisotropic film is formed in each of the regions corresponding to individual pixels.

[20] A liquid-crystalline composition comprising a liquid-crystaifine compound and at least one optically active compound the torsional force of which is changed by light.

[21] The liquid-crystalline composition according to [20], **characterized in that** the optically active compound is a

compound having a photoisomerizing group or a photodimerizing group.

[22] The liquid-crystalline composition according to [20] or [21], **characterized in that** the liquid-crystalline composition comprises at least one achiral liquid-crystaffine compound.

[23] The liquid-crystalline composition according to [22], **characterized in that** the at least one achiral liquid-crystalline compound is a compound having no photoisomerizing group or a photodimerizing group.

[24] The liquid-crystalline composition according to [22] or [23], **characterized in that** the ratio of the at least one optically active compound with respect to the at least one achiral liquid-crystalline compound is 10 to 30 weight %.

[25] The liquid-crystalfine composition according to any one of [20] to [24], **characterized in that** the at least one optically active compound has cinnamate group, stilbene group, or azobenzene group.

[26] The liquid-crystalline composition according to any one of [20] to [25], **characterized in that** the at least one optically active compound is a compound represented by the following general formula (1 a) or (1 b):

[Formula 1]

(1a)

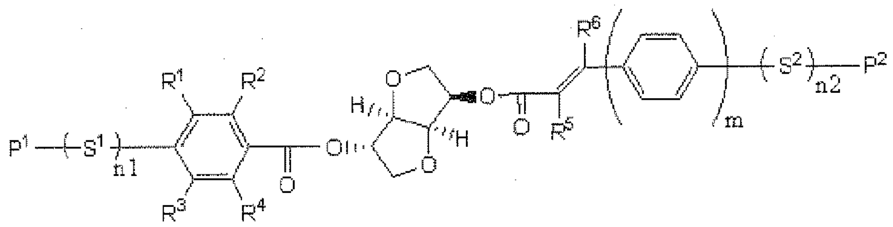

(1b)

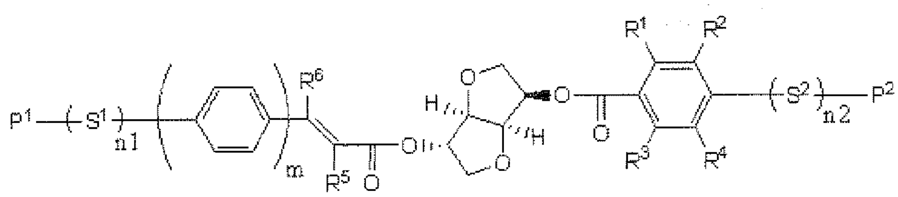

wherein $R^1$ $R^2$, $R^3$ and $R^5$ independently represents hydrogen atom or a substituent; each of $R^5$ and $R^6$ independently represents hydrogen atom, a substituted or unsubstituted alkyl group, or CN group; each of $P^1$ and $P^2$ represents a substituted or unsubstituted alkyl or aryl group; each of $S^1$ and $S^2$ independently represents a divalent linking group; m represents an integer of from 2 to 4, and each of n1 and n2 represents an integer of from 0 to 4.

[27] The liquid-crystalline composition according to any one of [20] to [26], **characterized in that** the at least one optically active compound is a polymer comprising at least one repeating unit having a partial structure represented by any one of the following general formulas (3a) to (3d) in a side chain:

[Formula 2]

(3a) 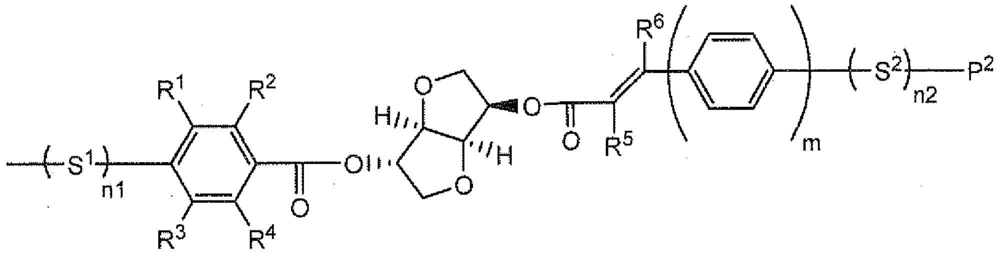

(3b) 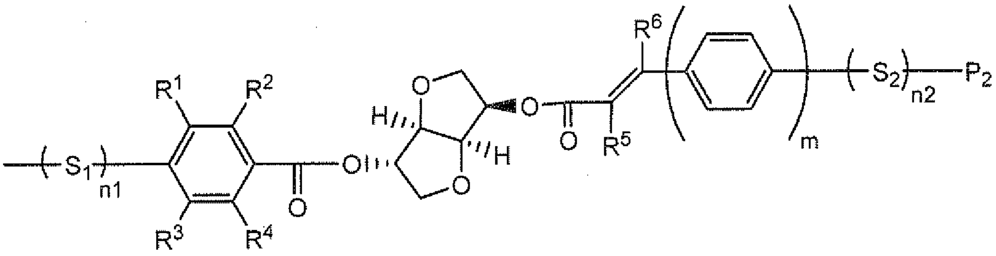

(3c) 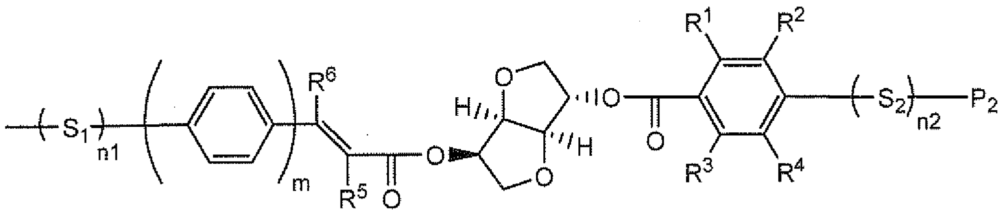

(3d) 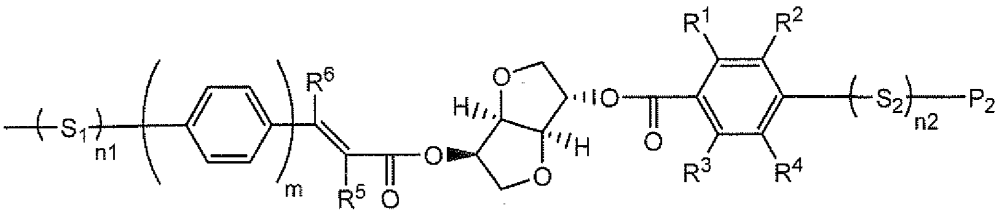

wherein each of $R^1$, $R^2$, $R^3$, and $R^5$ independently represents a hydrogen atom or a substituent; each of $R^5$ and $R^6$ independently represents a hydrogen atom, a substituted or unsubstituted alkyl group, or a CN group; each of $P^1$ and $P^2$ independently represents a substituted or unsubstituted alkyl or aryl group; each of $S^1$ and $S^2$ independently represents a divalent linking group; and m represents an integer of from 2 to 4, and each of n1 and n2 represents an integer of from 0 to 4.

[28] The liquid-crystalline composition according to [27], **characterized in that** the repeating unit is a repeating unit represented by any one of the following formulas (3a') to (3e'):

[Formula 3]

(3a')

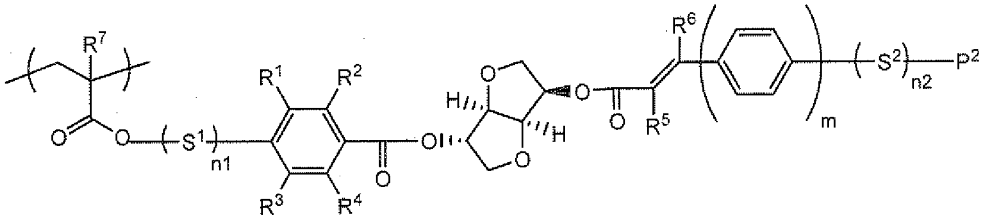

(3b')

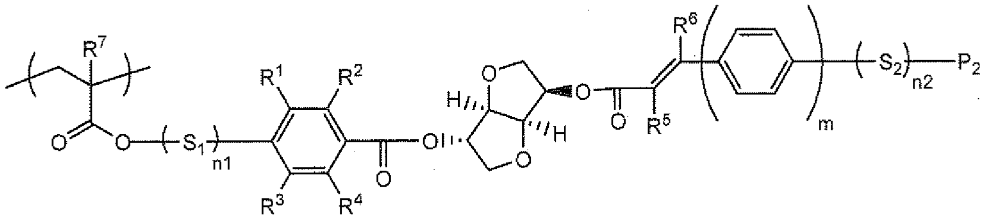

(3d')

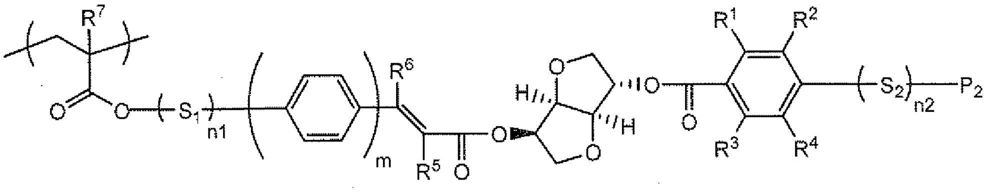

(3e')

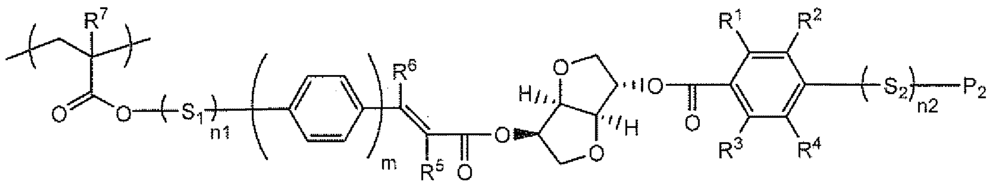

wherein symbols identical to those in formulas (3a) to (3d) are identically defined, respectively, and $R^7$ represents hydrogen atom or methyl group.

[29] The liquid-crystalline composition according to [27] or [28] **characterized in that** the polymer further comprises a repeating unit having at least one of the partial structures represented by the following formula (4) in a side chain:

[Formula 4]

(4)

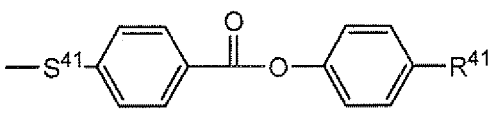

wherein $S^{41}$ represents a divalent slinking group and $R^{41}$ represents hydrogen atom or a substituent.

[30] The liquid-crystalline composition according to any one of [27] to [29] **characterized in that** the polymer is a polymer comprising at least one repeating unit represented by any one of the formulas (3a) to (3d) and at least one repeating unit represented by the following formula (4a):

[Formula 5]

(4a)

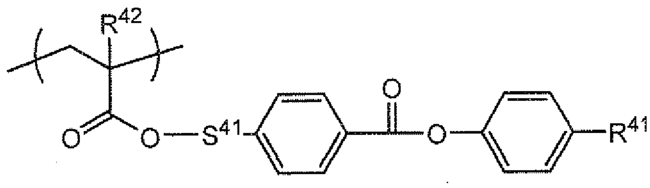

wherein symbols identical to those in formula (4) are identically defined; $R^{42}$ represents hydrogen atom or methyl group.

[31] A method of producing an optically anisotropic film of distorted twisted spiral structure, which comprises the following (1) and (2), in this order:

(1) heating a liquid-crystalline composition comprising at least one optically active compound the torsional force of which is changed by light to temperature $T_1$;
(2) irradiating the liquid-crystalline composition with polarized light at temperature $T_2$, provided that temperatures $T_1$ and $T_2$ satisfy the following relations (XI) and (XII):

$$T_{NI} < T_1 < 150°C \qquad (XI)$$

$$T_{CN} < T_2 < T_{NI} \qquad (XII)$$

wherein $T_{NI}$ is the temperature at which the liquid-crystalline composition phase transitions from a cholesteric phase to an isotropic phase, and $T_{CN}$ is the temperature at which the liquid-crystalline composition phase transitions from a crystal phase to a cholesteric phase.
[32] The method of producing an optically anisotropic film according to [31], which does not comprise irradiation with non-polarized light prior to the irradiation with polarized light.
[33] A method of producing an optically anisotropic film of distorted twisted spiral structure having in-plane anisotropy **characterized in that** the method comprises applying a liquid-crystalline composition comprising at least one optically active compound the torsional force of which is changed by light on a surface, making the liquid-crystalline composition cholesterically oriented, and subsequently irradiating the liquid-crystalline composition with polarized light, which does not comprise irradiation with non-polarized light prior to the irradiation with polarized light.
[34] The method according to any one of [31] to [33], wherein the liquid-crystalline composition is any one of [21] to [30].

[35] A method of producing a liquid crystal cell substrate, which comprises the following (11) to (13), in this order:

(11) applying a liquid-crystalline composition comprising at least one optically active compound the torsional force of which is changed by light on a substrate;
(12) heating the liquid-crystalline composition to temperature $T_1$;
(13) irradiating the liquid-crystalline composition with polarized light at temperature $T_2$, provided that temperatures $T_1$ and $T_2$ satisfy the following relations (XI) and (XII):

$$T_{NI} < T_1 < 150°C \qquad (XI)$$

$$T_{CN} < T_2 < T_{NI} \qquad (XII)$$

wherein $T_{NI}$ is the temperature at which the liquid-crystalline composition phase transitions from a cholesteric phase to an isotropic phase, and $T_{CN}$ is the temperature at which the liquid-crystalline composition phase transitions from

a crystal phase to a cholesteric phase.
[36] The method of producing a liquid crystal cell substrate according to [35], which does not comprise irradiation with nan-polarized light prior to the irradiation with polarized light.
[37] The method according to [35] or [36], wherein the liquid-crystalline composition is any one of [21] to [30].

Brief Description of Drawings

Figs. 1 outline of preparation of a liquid crystal cell having the optically Anisotropic film inside;
Figs. 2 shows schematic sectional views showing examples of the liquid crystal cell substrates of the present invention;
Fig. 3 shows schematic sectional views showing examples of the liquid crystal display device of the present invention.

Detailed Description of the Invention

The present invention will be explained below.
In the specification, ranges indicated with "to" mean ranges including the numerical values before and after "to" as the minimum and maximum values. Also, in the specification, a polymer includes a polymer consisting of one type of monomer and a copolymer consisting of two or more types of monomers. In the specification, a group such as an alkyl group may have a substituent or may not have a substituent, unless specifically mentioned. Therefore, "an alkyl group of carbon numbers A to B" may have a substituent or may not have a substituent. If the alkyl group has the substituent, the number of the carbon atom in the substituent is included in the carbon number A to B.
In the specification, Re(λ) and Rth(λ) represent an in-plane retardation and a retardation in the thickness direction at a wavelength λ, respectively. The measurement wavelength λ can be selected by conducting the measurement with exchanging a wavelength selecting filter manually or with changing the measurement value by using a program or the like. The Re(λ) is measured by means of KOBRA 21ADH or WR manufactured by Oji Scientific Instruments while applying a λ nm wavelength light in the normal line direction of the film. The Rth(λ) is calculated in the following manner when a film of a uniaxial or biaxial refractive index ellipsoid is measured.
The Rth(λ) is calculated by KOBRA 21ADH or WR based on 6 retardation values, an assumed value of average refractive index, and an inputted thickness. As the 6 retardation values, Re (λ) values are measured by applying a λ nm wavelength light to a film from 6 directions tilted at 0 to 50 degrees with 10 degrees interval to the film normal line by using an in-plane slow axis (detected by KOBRA 21ADH or WR) as a tilt axis (a rotation axis) or, when the film has no slow axis, by using an arbitrary in-plane axis as a rotation axis.
In the above calculation, when the film has a retardation value of 0 at a certain tilt angle to the normal line using the in-plane slow axis as the rotation axis, positive sign of a retardation value at a tilt angle larger than the certain tilt angle is converted to negative sign, and then the negative retardation value is used in the calculation by COBRA 21ADH or WR.
The Rth may be calculated by the following equalities (11) and (12) based on an assumed value of average refractive index, an inputted thickness, and 2 retardation values that is measured in 2 tilt directions by using a slow axis as a tilt axis (a rotation axis), or when the film has no slow axis, by using an arbitrary in-plane axis as a rotation axis.
Equality (11)

$$\mathrm{Re}(\theta)=\left[nx-\frac{ny\times nz}{\sqrt{\left\{ny\sin\left(\sin^{-1}\left(\frac{\sin(-\theta)}{nx}\right)\right)\right\}^{2}+\left\{nz\cos\left(\sin^{-1}\left(\frac{\sin(-\theta)}{nx}\right)\right)\right\}^{2}}}\right]\times\frac{d}{\cos\left\{\sin^{-1}\left(\frac{\sin(-\theta)}{nx}\right)\right\}}$$

Equality (12)

$$Rth=((nx+ny)/2-nz)\times d$$

Re(θ) represents a retardation value in a direction tilted at an angle θ to the normal line. In the equality (11), nx represents an in-plane refractive index in the slow axis direction, ny represents a refractive index in a direction perpendicular to nx in the plane, and nz represents a refractive index in a direction perpendicular to nx and ny. The symbol d represents thickness of the film.

When a film is measured that is not a uniaxial or biaxial index ellipsoid and thus has no so-called optic axis, Rth(λ) is calculated in the following manner.
The Rth(λ) is calculated by KOBRA 21ADH or WR based on 11 retardation values, an assumed value of average refractive index, and an inputted thickness. As the 11 retardation values, Re(λ) values are measured by applying a λ nm wavelength light to the film from 11 directions tilted at -50 to +50 degrees with 10 degrees interval to the film normal line by using an in-plane slow axis (detected by KOBRA 21ADH or WR) as a tilt axis (a rotation axis).
In the above measurement, the assumed values of average refractive indexes may be those described in Polymer Handbook (JOHN WILEY & SONS, INC.) and catalogs of various optical films. As for a film of which an average refractive index is unknown, the value can be measured by an Abbe refractometer. The average refractive indexes of major optical film materials are as follows: cellulose acylate (1.48), cycloolefin polymer (1.52), polycarbonate (1.59), polymethyl methacrylate (1.49), polystyrene (1.59).
By inputting the assumed average refractive index values and thicknesses, nx, ny, and nz are calculated by KOBRA 21ADH or WR.

Rth is determined to be positive or negative by measuring the retardation with incident light of wavelength 550 nm from the direction inclined by +20° with respect to the normal direction of the film using the slow axis as the tilt axis (the axis of rotation), and when the retardation exceeds Re, Rth is determined to be positive, and when the retardation is below Re, Rth is determined to be negative. However, if the sample has |Rth/Re| of 9 or more, Rth is determined to be positive when the slow axis of the sample is in in-plane direction of the film surface, and Rth is determined to be negative when the slow axis of the sample is in thickness direction of the film surface, in which the slow axis can be determined by using a test plate of polarizing plate in a state inclining the sample by +40° witch respect to the normal direction of the film using the fast axis as the tilt axis (the axis of rotation) by using a polarizing microscope with a freely rotating mount.

It is to be noted that, regarding angles, the term "substantival" in the context of this specification means that a tolerance of less than ±5" with respect to the precise angles can be allowed. Difference from the precise angles is preferably less than 4°, and more preferably less than 3°. It is also to be noted that, regarding retardation values, the term "substantival" in the context of the specification means that a tolerance of less than ±5% with respect to the precise values can be allowed. It is also to be noted that the term "The Re value is substantially not zero" in the context of the specification means that the Re value is not less than 5 nm. The measurement wavelength for refractive indexes is 550 nm, unless otherwise noted. It is also to be noted that the term "visible light" in the context of the specification means light of a wavelength falling within the range from 400 ta 700 nm.

1. The optically anisotropic film

The present invention relates to an optically anisotropic film of distorted twisted spiral structure. The term "an optically anisotropic film of distorted twisted spiral structure" means an optically anisotropic film containing an optically anisotropic material formed into a distorted twisted spiral structure. Here, the optically anisotropic material can generally be a polymeric material that is capable of forming a cholesteric structure. A liquid-crystalline composition containing at least one optically active compound the torsional force of which is changed by light can be employed as such a material in the present invention. More specifically, the present invention relates to an optically anisotropic film of distorted twisted spiral structure that is formed by irradiation with polarized light after cholesterically orienting (referring to orientation into a cholesteric orientation) a liquid-crystalline composition containing at least one optically active compound the torsional force of which is changed by light. The optically anisotropic film of the present invention has a retardation derived from distortion of the spiral structure, that is, an optical biaxial property, and thus is useful for the optical compensation of liquid-crystal devices, particularly VA mode liquid-crystal display devices.
Materials that can be used in the structure of the optically Anisotropic film of the present invention, and methods of manufacturing it, will be described below.

1. -1 The optically active compound the torsional force of which is changed by light

An optically active compound the torsional force of which is changed by light is utilized in the structure of the optically anisotropic film in the present invention. The optically active compound is a compound that can induce a spiral twist in the molecules of the liquid-crystalline compound or the like that are contained in the composition at the same time, in a prescribed torsional direction. It is also a compound that is capable of switching between at least two states exhibiting different torsional forces when irradiated with light. An example of the optically active compound includes a

compound having a photoisomerizing group or a photodimerizing group in a portion of the molecule in addition to a chiral moiety. The compound is isomerized or dimerized by irradiation with light, switching to a state of different torsional force. Examples of photoisomerizing groups and photodimerizing groups include cinnamate groups, stilbene groups, and azobenzene groups.

Any optically active compound that satisfies the above characteristics can be employed in the present invention. Examples of optimally active compounds the torsional force of which is changed by light include the compounds described in Japanese Unexamined Patent Publication (KOKAI) Noes. 2003-306490 and 2003-306491, any of which can be employed.

1. -1-1 Examples of optimally active compounds: isosorbide-type compounds

In the present, isosorbide-type compounds are preferably employed as the optically active compound. Examples are the compounds represented by general formulas (1a) and (1b) below.

[Formula 6]

(1a)

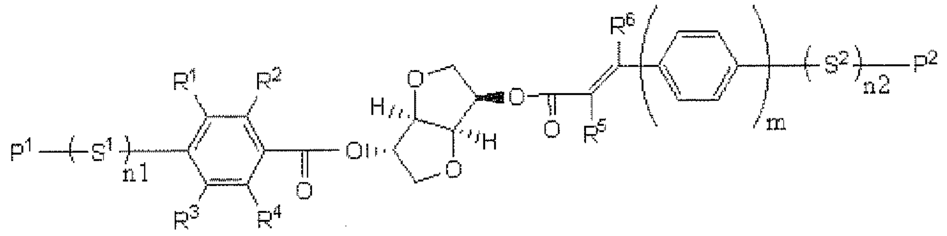

(1b)

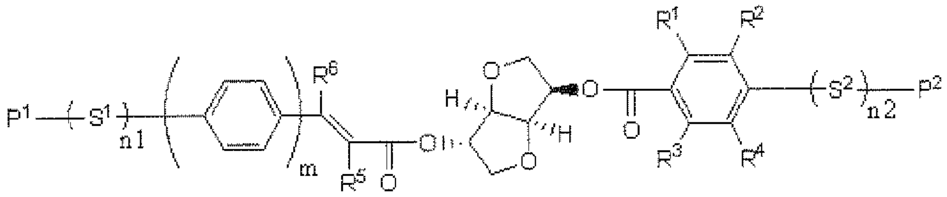

Each of $R^1$, $R^2$, $R^3$ and $R^5$ independently represents hydrogen atom or a substituent. Each of $R^5$ and $R^3$ independently represents hydrogen atom, a substituted or unsubstituted alkyl group, or CN group. Each of $P^1$ and $P^2$ represents a substituted or unsubstituted alkyl or aryl group. Each of $S^1$ and $S^2$ independently represents a divalent linking group. m represents an integer of from 2 to 4, and each of n1 and n2 represents an integer of from 0 to 4.

The following groups are examples of the substituents represented by $R^1$, $R^2$ $R^3$, and $R^4$.

Alkyl groups (alkyl groups preferably having 1 to 20 carbon atoms, more preferably having 1 to 12 carbon atoms, particularly preferably having 1 to 8 carbon atoms, such as methyl groups, ethyl groups, isopropyl groups, tert-butyl groups, n-octyl groups, n-decyl groups, n-hexadecyl groups, cyclopropyl groups, cyclopentyl groups, and cyclohexyl groups); alkenyl groups (alkenyl groups preferably having 2 to 20 carbon atoms, more preferably having 2 to 12 carbon atoms, and particularly preferably having 2 to 8 carbon atoms, such as vinyl groups, aryl groups, 2-butenyl groups, and 3-pentenyl groups); alkynyl groups (alkynyl groups preferably having 2 to 20 carbon atoms, more preferably having 2 to 12 carbon atoms, and particularly preferably having 2 to 8 carbon atoms, such as propargyl groups and 3-pentynyl groups); aryl groups (aryl groups preferably having 6 to 30 carbon atoms, more preferably having 6 to 20 carbon atoms, and particularly preferably having 6 to 12 carbon atoms, such as phenyl groups, p-methylphenyl groups, and naphthyl groups); substituted and unsubstituted amino groups (amino groups preferably having 0 to 20 carbon atoms, more preferably having 0 to 10 carbon atoms, and particularly preferably having 0 to 6 carbon atoms, such as unsubstituted amino groups, methylamino groups, dimethylamino groups, diethylamino groups, and anilino groups);

Alkoxy groups (alkoxy groups preferably having 1 to 20 carbon atoms, such as methoxy groups, ethoxy groups, and butoxy groups); alkoxycarbonyl groups (alkoxycarbonyl groups preferably having 2 to 20 carbon atoms, more preferably having 2 to 16 carbon atoms, and particularly preferably having 2 to 10 carbon atoms, such as methoxycarbonyl groups and ethoxycarbonyl groups); acyloxy groups (acyloxy groups preferably having 2 to 20 carbon atoms, more preferably having 2 to 16 carbon atoms, and particularly preferably having 2 to 10 carbon atoms, such as acetoxy groups

and benzoyloxy groups); acylamino groups (acylamino groups preferably having 2 to 20 carbon atoms, more preferably having 2 to 16 carbon atoms, and particularly preferably having 2 to 10 carbon atoms, such as acetylamino groups and benzoylamino groups); alkoxycarbonylamino groups (alkoxycarbonylamino groups preferably having 2 to 20 carbon atoms, more preferably having 2 to 16 carbon atoms, and particularly preferably having 2 to 12 carbon atoms, such as methoxycarbonylamino groups); aryloxycarbonylamino groups (aryloxycarbonylamino groups preferably having 7 to 20 carbon atoms, more preferably having 7 to 16 carbon atoms, and particularly preferably having 7 to 12 carbon atoms, such as phenyloxycarbonylamino groups); sulfonylamino groups (suifonylamino groups preferably having 1 to 20 carbon atoms, more preferably having 1 to 16 carbon atoms, and particularly preferably having 1 to 12 carbon atoms, such as methanesulfonylamino groups and benzenesulfonylamino groups); sulfamoyl groups (sulfamoyl groups preferably having 0 to 20 carbon atoms, more preferably having 0 to 16 carbon atoms, and particularly preferably having 0 to 12 carbon atoms, such as sulfamoyl groups, methylsulfamoyl groups, dimethylsulfamoyl groups, and phenylsulfamoyl groups); carbamoyl groups (carbamoyl groups preferably having 1 to 20 carbon atoms, more preferably having 1 to 16 carbon atoms, and particularly preferably having 1 to 12 carbon atoms, such as unsubstituted carbamoyl groups, methylcarbamoyl groups, diethylcarbamoyl groups, and phenylcarbamoyl groups);

Alkylthio groups (alkylthio groups preferably having 1 to 20 carbon atoms, more preferably 1 to 16 carbon atoms, and particularly preferably 1 to 12 carbon atoms, such as methylthio groups and ethylthio groups); arylthio groups (arylthio groups preferably having 6 to 20 carbon atoms, more preferably having 6 to 16 carbon atoms, and particularly preferably having 6 to 12 carbon atoms, such as phenylthio groups); sulfonyl groups (sulfonyl groups preferably having 1 to 20 carbon atoms, more preferably having 1 to 16 carbon atoms, and particularly preferably having 1 to 12 carbon atoms, such as mesyl groups and tosyl groups); sulfinyl groups (sulfinyl groups preferably having 1 to 20 carbon atoms, more preferably having 1 to 16 carbon atoms, and particularly preferably having 1 to 12 carbon atoms, such as methanesulfinyl groups and benzenesulfinyl groups); ureido groups (ureido groups preferably having 1 to 20 carbon atoms, more preferably having 1 to 16 carbon atoms, and particularly preferably having 1 to 12 carbon atoms, such as unsubstituted ureido groups, methylureido groups, and phenylureido groups); phosphoramides (phosphoramides preferably having 1 to 20 carbon atoms, more preferably having 1 to 16 carbon atoms, and more preferably having 1 to 12 carbon atoms, such as diefihylphosphoramicie and phenylphosphoramide); hydroxy group; mercapto group; halogen atoms (fluorine atom, chlorine atom, bromine atom, iodine atom, for example); cyano group; sulfo group; carboxyl group; nitro group; hydroxamic acid group; sulfino group; hydrazino group; imino group; heterocyclic groups (heterocyclic groups preferably having 1 to 30 carbon atoms, more preferably having 1 to 12 carbon atoms, such as heterocyclic groups having hetero atoms in the form of nitrogen atoms, oxygen atoms, and sulfur atoms, such as imidazolyl groups, pyridyl groups, quinolyl groups, furyl groups, piperidyl groups, morpholino groups, benzooxazolyl groups, benzimidazolyl groups, and benzthiazolyl groups); and silyl groups (silyl groups preferably having 3 to 40 carbon atoms, more preferably having 3 to 30 carbon atoms, and particularly preferably having 3 to 24 carbon atoms, such as trimethylsilyl groups and triphenylsilyl groups).

These substituents may be further substituted with these same substituents. When two or more substituents are present, they may be identical or different. Where possible, they may bond together to form a ring.

The substituents represented by $R^1$, $R^2$, $R^3$, and $R^4$ are preferably alkyl groups, aryl groups, alkoxy groups, alkoxycarbonyl groups, acyloxy groups, acylamino groups, sulfonylamino groups, alkylthio groups, or halogen atoms; more preferably alkyl groups, aryl groups, alkoxy groups, alkoxycarbonyl groups, acyloxy groups, or halogen atoms; and particularly preferably, alkyl groups, alkoxy groups, or halogen atoms. $R^1$, $R^2$, $R^3$, and $R^4$ are preferably alkyl groups, alkoxy groups, or halogen atoms.

Examples of the substituted or unsubstituted alkyl groups represented by $R^5$ and $R^6$ are identical to those given above.

Each of $P^1$ and $P^2$ represents a substituted or unsubstituted alkyl or aryl group. The alkyl groups represented by $P^1$ and $P^2$ preferably have 1 to 10 carbon atoms, more preferably have 1 to 8 carbon atoms, and particularly preferably have 1 to 6 carbon atoms. The alkyl groups may be branched or cyclic. The aryl groups represented by $P^1$ and $P^2$ preferably have 6 to 24 carbon atoms, preferably have 6 to 18 carbon atoms, and more preferably have 6 to 12 carbon atoms. Specific examples of preferred aryl groups are phenyl group and naphthalene group. $P^1$ and $P^2$ are preferably substituted or unsubstituted alkyl groups. The alkyl groups and aryl groups represented by $P^1$ and $P^2$ may have substituents. Examples of the substituents include the examples given for $R^1$, $R^2$, and $R^3$. When $P^1$ and $P^2$ represent alkyl or aryl groups having substituents, the substituents may include a Polymerizable group. The comprising of a polymerizable group is preferable in that the hardness of the film increases and variation in the optical characteristics of the optically anisotropic film that is formed is reduced. The compound may also comprise two or more polymerizable groups. For example, it may comprise a polymerizable group in $P^1$ on one end and have a polymerizable group in the terminal moiety on the $P^2$ side, which is the other end.

The polymerizable group is not specifically limited. A polymerizable group that is capable of undergoing an addition polymerization (including ring-opening polymerization) reaction or a condensation polymerization reaction ispreferable. Examples of the polymerizable group are given below.

[Formula 7]

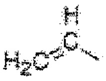 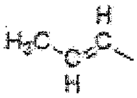 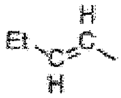 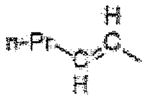

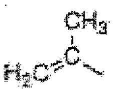 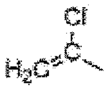 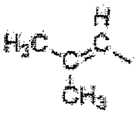 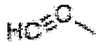

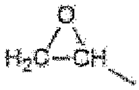 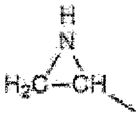 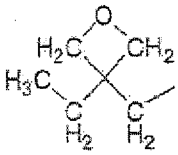 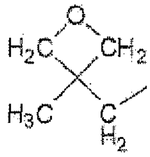

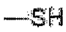 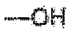 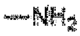

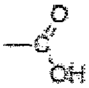 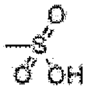 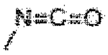 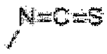

A polymerizable group that undergoes radical polymerization or cationic polymerization is preferable as the polymerizable group. Commonly known radically polymerizing groups can be employed as the radically polymerizable group. Preferable examples include (meth)acrylate groups (the term being used in a manner intended to include both acrylate groups and methacrylate groups). Commonly known cationic polymerizing groups can be employed. Specific examples include alicyclic ether groups, cyclic acetal groups, cyclic lactone groups, cyclic thioether groups, spiroorthoester groups, and vinyloxy groups. Among these, the alicyclic ether groups and vinyloxy groups are preferable, and the epoxy groups, oxetanyl groups, and vinyloxy groups are preferred. The above compound may have two or more polymerizable groups. In that case, it may have polymerizable groups of differing polymerization reaction mechanisms, such as a radically polymerizable group and a cationically polymerizable group or the like, or identical polymerizable groups.

Each of $S^1$ and $S^2$ preferably comprises -O-, -CO-, -$NR^6$-, an alkylene group, or an arylene group, and more preferably comprises -O-, -CO-, -$NR^6$-, or an alkylene group; and particularly preferably, comprises -O-, -CO-, or an alkylene group. When $S^1$ and $S^2$ contains alkylene groups, the alkylene groups preferably have 1 to 10 carbon atoms, more preferably have 1 to 8 carbon atoms, and particularly preferably have 1 to 6 carbon atoms. Specific examples of particularly preferable alkylene groups include methylene, ethylene, trimethylene, tetrabutylene, and hexamethylene groups. When $S^1$ and $S^2$ contain arylene groups, the arylene groups preferably have 6 to 24 carbon atoms, more preferably have 6 to 18 carbon atoms, and particularly preferably have 6 to 12 carbon atoms. Specific examples of particularly preferable arylene groups include phenylene and naphthalene groups. When $S^1$ and $S^2$ contain divalent linking groups obtained by combining alkylene groups and arylene groups (that is, aralkylene groups), the aralkylene groups preferably have 7 to 34 carbon atoms, more preferably have 7 to 26 carbon atoms, and more preferably have 7 to 16 carbon atoms. Specific examples of particularly preferable aralkylene groups include phenylenemethylene groups, phenyleneethylene groups, and methylenephenylene groups. The groups given by way of example for $S^1$ and $S^2$ may have suitable substituents.

In the above formula, m preferably represents the integer 2 or 3.

In the above formula, n1 and n2 preferably represent integers of from 0 to 2.

Specific examples of compounds represented by general formulas (1a) and (1b) will be given below. However, the compounds are not limited to the following examples.

[Formula 8]

C-1

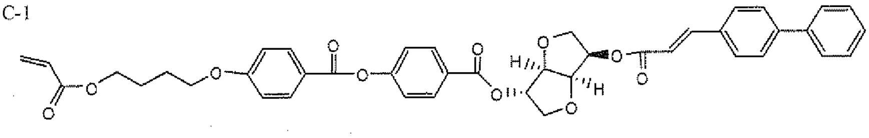

C-2

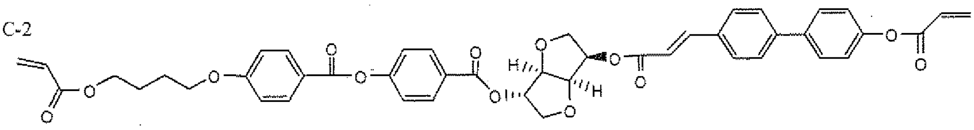

C-3

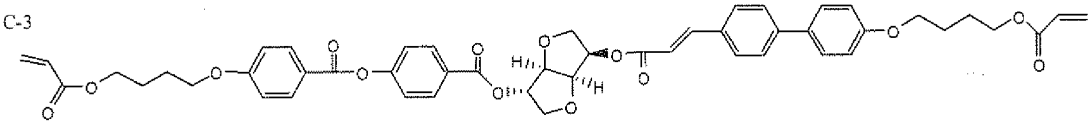

C-4

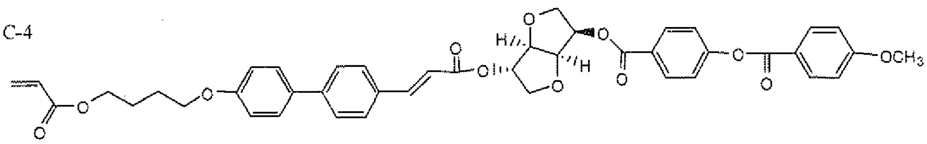

C-5

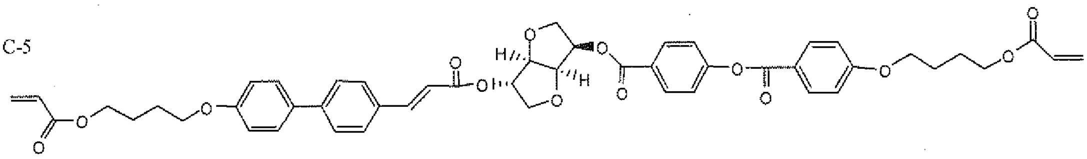

[Formula 9]

C-6

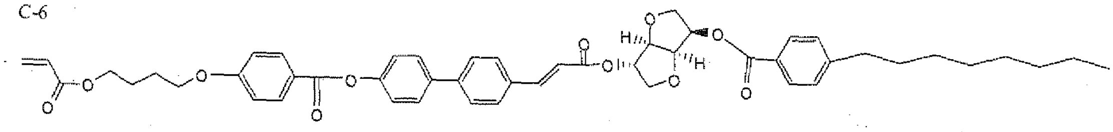

C-7

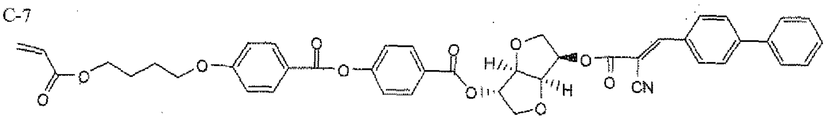

C-8

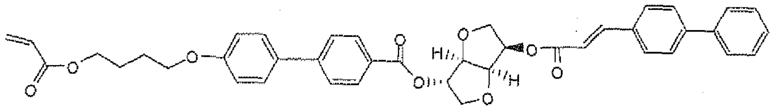

C-9

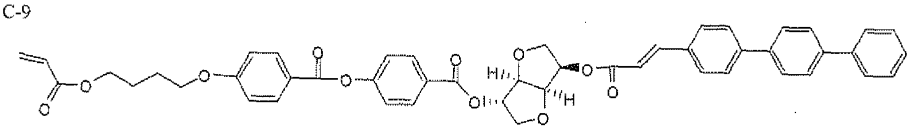

C-10

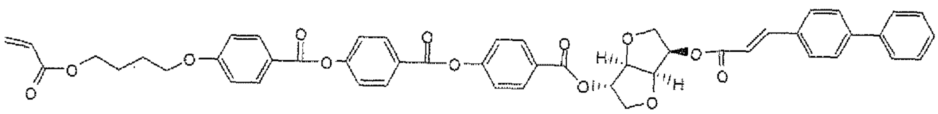

C-11

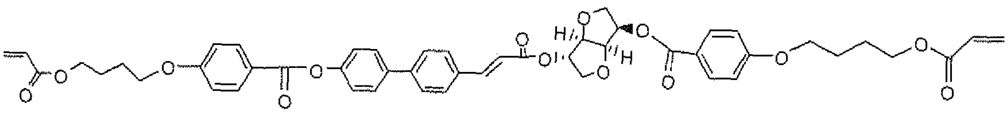

The optically active compound employed in the present invention may be a polymers. An example of the polymer is a polymer comprising at least one repeating unit having a partial structure represented by one of general formulas (3a) to (3d) below in a side chain.

[Formula 10]

(3a) 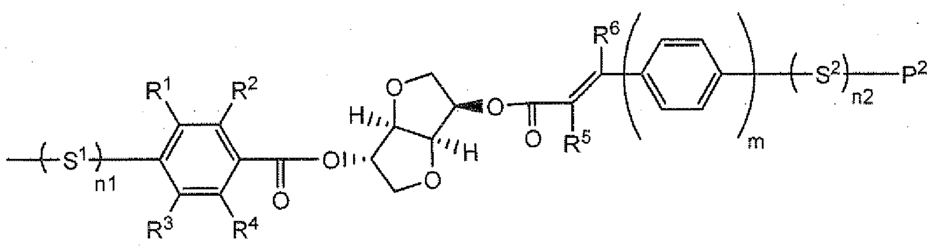

(3b) 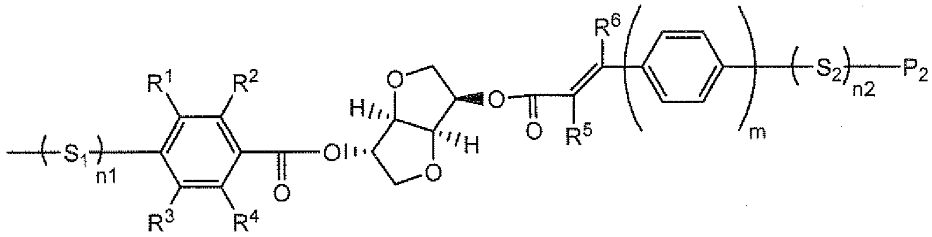

(3c) 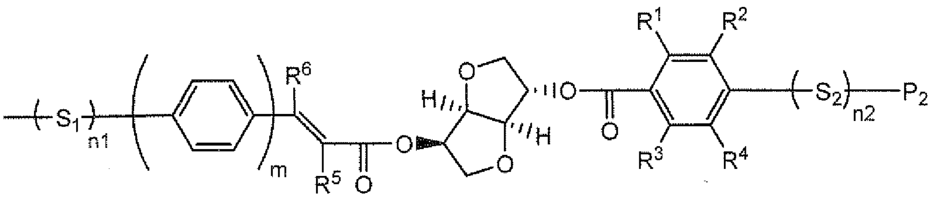

(3d) 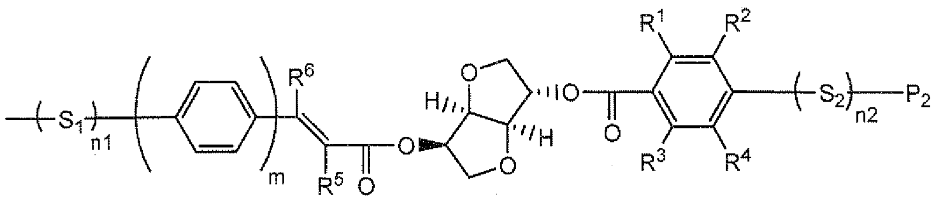

In the above formulas, each of $R^1$, $R^2$, $R^3$, and $R^5$ independently represents a hydrogen atom or a substituent; each of $R^5$ and $R^6$ independently represents a hydrogen atom, a substituted or unsubstituted alkyl group, or a CN group; each of $P^1$ and $P^2$ independently represents a substituted or unsubstituted alkyl or aryl group; each of $S^1$ and $S^2$ independently represents a divalent linking group; and m represents an integer of from 2 to 4, and each of n1 and n2 represents an integer of from 0 to 4.
The specific examples and preferable ranges thereof are identical to the specific examples and desirable ranges of above-described formulas (1a) and (1b).

The group that constitutes part or all of the main chain of the polymer and to which the above side chain is bonded is not specifically limited. It can be determined based on the monomer that is selected. Examples of the above repeating unit are the repeating units represented by general formulas (3a') to (3d') below that are derived from (meth) acrylates having a partial structure represented by one of general formulas (3a) to (3d) above in an ester moiety.

[Formula 11]

(3a')

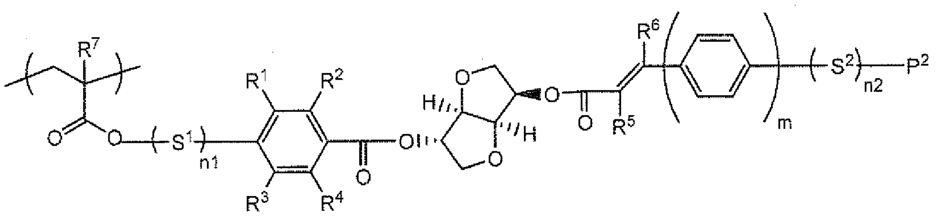

(3b')

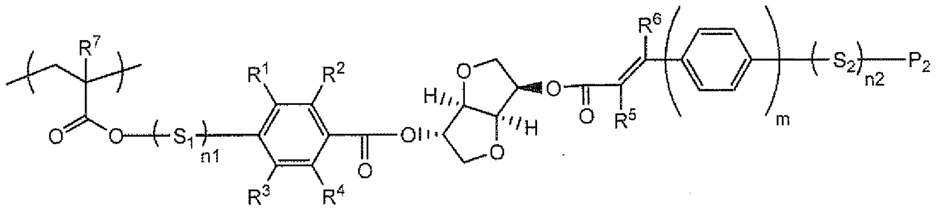

(3d')

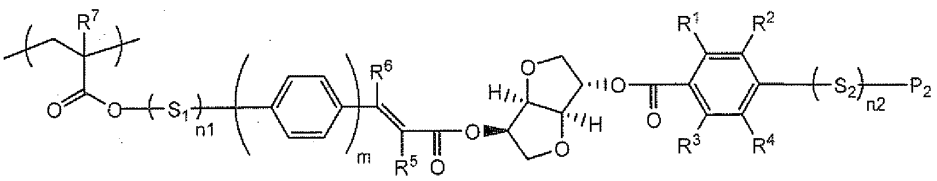

(3e')

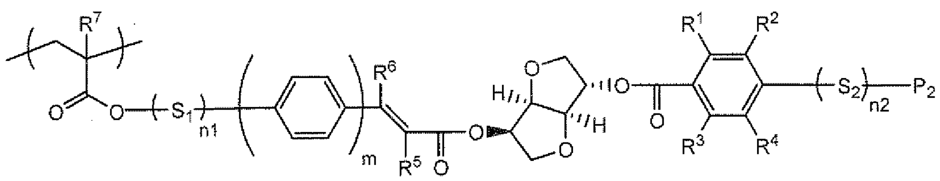

In the formulas, symbols that are identical to those in formulas (3a) to (3d) are identically defined. $R^7$ represents a hydrogen atom or a methyl group.

A polymer having a repeating unit having a mesogenic structure in a side chain in addition to a repeating unit having a partial structure represented by one of formulas (3a) to (3d) in a side chain can be employed in the present invention. Employing a polymer having a repeating unit having a mesogenic structure in a side chain will sometimes permit the fabrication of a desired optically anisotropic film without separately employing a liquid-crystalline compound. Here, the term "mesogenic" refers to the basic structure of a liquid crystal. Normally, a liquid-crystal molecule is comprised of a rigid partial structure and one or more flexible partial structures. The rigid partial structure orients the molecule, while the flexible partial structures impart fluidity to the liquid crystal. This rigid partial structure that is an essential partial structure of the liquid crystal is referred to as a "mesogen." An example is the mesogenic structure represented by formula (4) below. A polymer having a repeating unit having at least one of the partial structures represented by formula (4) in a side chain can be employed as the optically active compound.

[Formula 12]

(4)

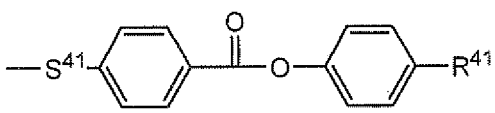

In the formula, $S^{41}$ represents a divalent linking group and $R^{41}$ represents a hydrogen atom or a substituent.

The divalent linking group represented by $S^{41}$ preferably comprises -O-, -CO-, -$NR^6$-, an alkylene group, or an arylene group; preferably comprises -O-, -CO-, -$NR^6$-, or an alkylene group; and more preferably comprises -O-, -CO-,

or an alkylene group. When $S^{41}$ contains an alkylene group, the alkylene group preferably has 1 to 10 carbon atoms, more preferably 1 to 8 carbon atoms, and particularly preferably, 1 to 6 carbon atoms. Preferred examples of the alkylene group include methylene, ethylene, trimethylene, tetrabutylene, and hexamethylene. When $S^{41}$ contains an arylene group, the arylene group preferably has 6 to 24 carbon atoms, more preferably 6 to 18 carbon atoms, and particularly preferably, 6 to 12 carbon atoms. Specific examples of preferred arylene groups include phenylene and naphthalene groups. When $S^1$ and $S^2$ contain a divalent linking group obtained by combining an alkylene group and an arylene group (that is, an aralkylene group), the aralkylene group preferably has 7 to 34 carbon atoms, more preferably 7 to 26 carbon atoms, and particularly preferably, 7 to 16 carbon atoms. Specific examples of preferred aralkylene groups include phenylenemethylene groups, phenyleneethylene groups, and methylenephenylene groups. The groups given by way of example for $S^{41}$ may also have suitable substituents.

The substituent represented by $R^{41}$ is not specifically limited. Examples are the same as those given for the substituent represented by $R^1$ and the like. Preferable examples includes a halogen atom, a cyano group, a substituted or unsubstituted alkyl group having 1 to 8 carbon atoms, and substituted or unsubstituted alkoxy group having 1 to 8 carbon atoms. $R^{41}$ may have a polymerizable group on its end. Examples of the polymerizable group are the same as the examples given for the polymerizable group of $P^1$ and the like.

The group constituting part or all of the main chain and to which a side chain having the partial structure represented by formula (4) is bonded is not specifically limited. It can be determined based on the monomer that is selected. Examples of the repeating unit are the repeating unit represented by general formula (4a) below that is derived from (meth)acrylates having the side chain of general formula (4) above in the ester moiety.

[Formula 13]

(4a)

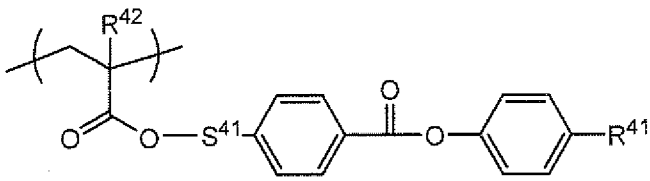

In the formula, symbols that are identical to those in formula (4) are identically defined. $R^{42}$ represents a hydrogen atom or a methyl group.

In the form in which the optically active compound is a polymer having at least one repeating unit ("repeating unit A" hereinafter) having in a side chain at least one partial structure represented by one from among general formulas (3a) to (3d) and a repeating unit ("repeating unit B" hereinafter) having in a side chain at least one partial structure represented by formula (4) above, the ratio of repeating units A and B is not specifically limited. It is preferable for repeating unit A to constitute 5 to 40 weight percent and for repeating unit B to constitute 60 to 95 weight percent, and it is preferable for repeating unit A to constitute 10 to 30 weight percent and for repeating unit B to constitute 70 to 90 weight percent. Nor is the molecular weight of the polymer specifically limited. Naturally, it can have a molecular weight falling within the range of 10,000 and above, which is recognized as the domain of the high polymers. It can also have a molecular weight falling with a range of 1,000 and above but less than 10,000, which is recognized as the range of semi-high polymers, or a degree of polymerization falling within a range of about 2 to 20, which is recognized as the domain of the oligomers (Iwanami Dictionary of Physics and Chemistry, 3rd edition, Supplemented, ed. by Fumiichi Tamamushi et al., p. 449, Iwanami Shoten, 1982). That is, the terms "high polymer" and "polymer" as employed in the present application refer to polymers with a molecular weight of 1,000 or higher and a degree of polymerization of 20 or higher. The above polymer preferably has a molecular weight of 1,000 to 1,000,000, more preferably 1,000 to 500,000, and further preferably, 5,000 to 100,000.

The weight average molecular weight is measured by gel permeation chromatography (GPC) as a polystyrene (PS)-converted value.

Examples of polymers that can be employed as the optically active compound in the present invention are given below, but the the optically active compound is not limited to the following examples.

[Formula 14]

P-1

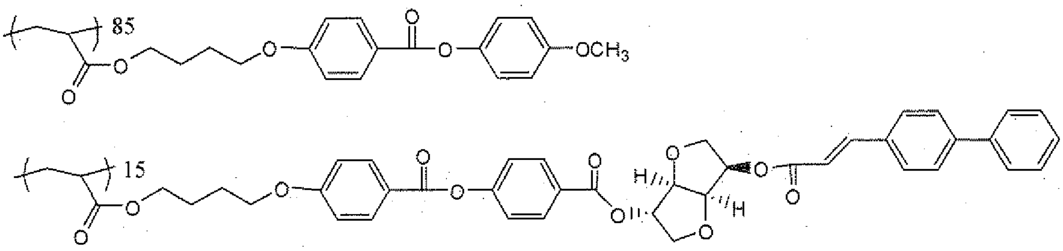

P-2

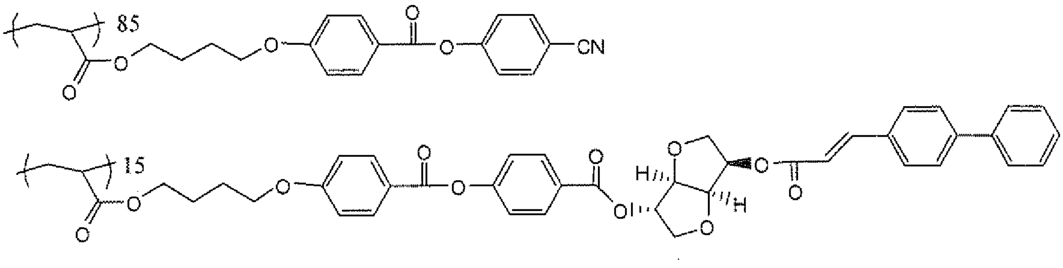

P-3

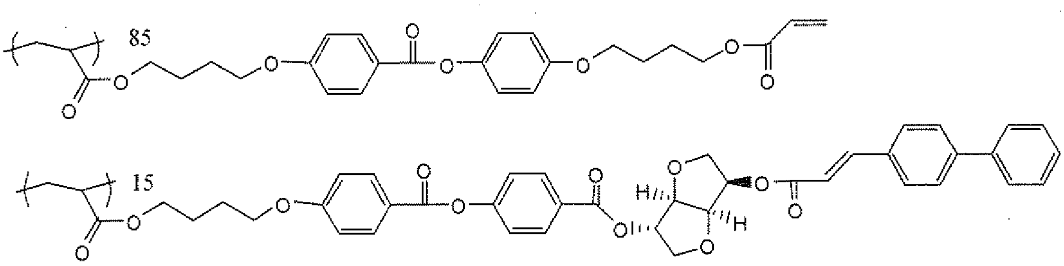

[Formula 15]

P-4
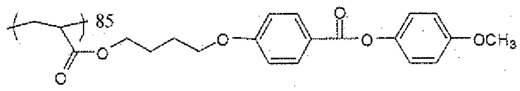
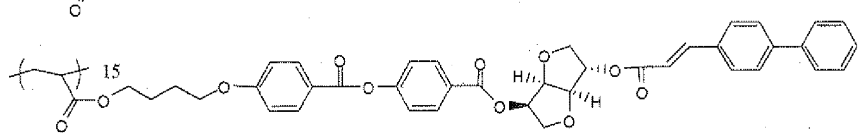

P-5
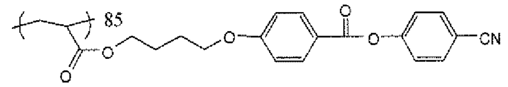
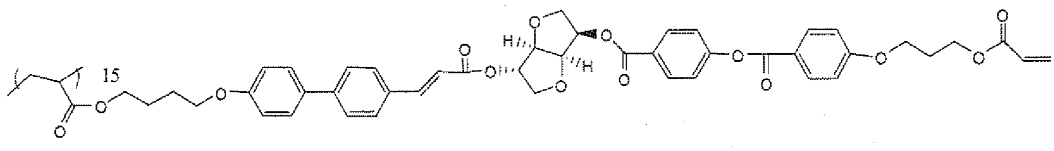

P-6
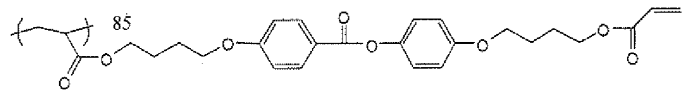
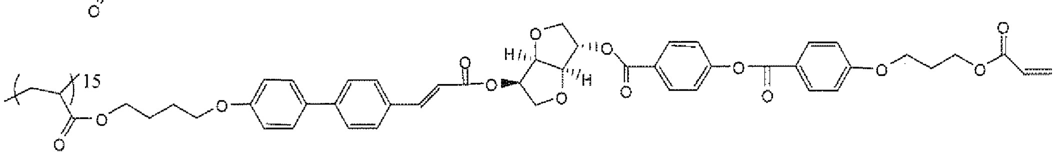

The polymer can be manufactured by a variety of methods. For example, a polymerization method such as anionic polymerization, radical polymerization, or cationic polymerization utilizing a vinyl group can be employed. Of these, radical polymerization is employed for a variety of purposes and is particularly preferred. Known compounds such as radical thermopolymerization initiators and radical photopolymerization initiators can be employed as the polymerization initiator in radical polymerization. The use of a radical thermopolymerization initiator in particular isprefarable. Here, the radical thermopolymerization initiator is a compound that generates a radical when heated to or above its decomposition temperature.
Examples of such radical thermopolymerization initiators include : diacyl peroxides (such as acetyl peroxide and benzoyl peroxide); ketone peroxides (such as methyl ethyl ketone peroxide and cyclohexanone peroxide); hydroperoxides (such as hydrogen peroxide, tert-butyl hydroperoxide, and cumene hydroperoxide); dialkyl peroxides (such as di-tert-butyl peroxide, dicumyl peroxide, and dilauroyl peroxide); peroxyesters (such as tert-butyl peroxyacetate and tert-butyl peroxypivalate); azo compounds (such as azobisisobutyronitrile and azobisisovaleronate); and persulfates (such as ammonium persulfate, sodium persulfate, and potassium persulfate). Such radical thermopolymerization initiators may be employed singly or in combinations of two or more.

The radical polymerization method is not specifically limited; emulsion polymerization, suspension polymerization, block polymerization, solution polymerization, or the like may be employed. Solution polymerization, which is the classic radical polymerization method, will be described in greater detail. Other polymerization methods are similar in their broad outlines; the details thereof are given in, for example, "Experimental Methods in Polymer Chemistry," Comp. by The Society of Polymer Science, Japan, (Tokyo Kagaku Dojin, 1981) and the like.

An organic solvent is employed to conduct solution polymerization. The organic solvent can be selected as desired to the extent that neither the object nor the effect of the present invention is compromised. The organic solvent is normally one having a boiling point at atmospheric pressure that falls within a range of 50 to 200°C, and is preferably an organic solvent that uniformly dissolves each structural component. Examples of preferable organic solvents include : alcohols such as isopropanol and butanol; ethers such as dibutyl ether, ethylene glycol dimethyl ether, tetrahydrofuran, and dioxane; ketones such as acetone, methyl ethyl ketone, methyl isobutyl ketone, and cyclohexanone; esters such as ethyl acetate, butyl acetate, amyl acetate, and gamma-butyrolactone; aromatic hydrocarbons such as benzene, toluene, and xylene; dimethyl acetamide; dimethyl formamide; and N-methyl pyrrolidone. These organic solvents may be employed singly or in combinations of two or more. From the perspective of the solubility of the monomer and the polymer that is produced, it is also possible to employ a water-organic solvent mixture obtained by combining water with the above organic solvents.

The solution polymerization conditions are not specifically limited. For example, heating is preferably conducted for from 10 minutes to 30 hours within a temperature range of 50 to 200°C. An inert gas purge is preferably conducted before commencing solution polymerization and during solution polymerization to prevent deactivation of the radical that is produced. Normally, nitrogen gas is suitably employed as the inert gas.

To obtain a polymer with a molecular weight within the preferable range, the use of a radical polymerization method employing a chain-transfer agent is effective. The chain-transfer agent employed can be a mercaptan (such as octyl mercaptan, decyl mercaptan, dodecyl mercaptan, tert-dodecyl mercaptan, octadecyl mercaptan, thiophenol, or p-nonylthiophenol); a polyhalogenated alkyl (such as carbontetrachloride, chloroform, 1,1,1-trichloroethane, and 1,1,1-tribromooctane); or a low-activity monomer (such as alpha-methylstyrene or an alpha-methylstyrene dimer). A mercaptan having 4 to 16 carbon atoms is preferable. The quantity of chain-transfer agent employed is greatly affected by the activity of the chain-transfer agent, the combination of monomers, the polymerization conditions, and the like. Precise control is necessary. Normally, the quantity employed is about 0.01 to 50 mol percent, preferably 0.05 to 30 mol percent, and particularly preferably, 0.08 to 25 mol percent, of the total number of mols of monomer employed. It suffices for the chain-transfer agent to be present in the system at the same time as the monomer the degree of polymerization of which is to be controlled in the polymerization process. The method of addition does not particularly matter. It may be added by dissolution in the monomer, or added separately from the monomer.

A liquid-crystalline composition is used for the preparation of the optically anisotropic film of the present invention. An Example of the liquid-crystalline composition includes a composition containing at least one optically active compound as described above and at least one liquid-crystalline compound. The liquid-crystalline compounds can generally be classified by molecular geometry into rod-like one and discotic one. Each category further includes low-molecular type and high-molecular type. The high-molecular type generally refers to that having a degree of polymerization of 100 or above ("Kobunshi Butsuri-Soten'i Dainamikusu (Polymer Physics-Phase Transition Dynamics), by Masao Doi, p.2, published by Iwanami Shoten, Publishers, 1992). Either type of the liquid-crystalline molecule may be used in the present invention, wherein it is preferable to use a rod-like liquid-crystalline compound.

A liquid-crystalline compound used in the present invention may be a liquid-crystalline compound that can be cholesterically oriented. A liquid-crystalline compound per se does not need to be optically active, and an achiral liquid-crystalline compound can be used. In the production process of the optically anisotropic film, an achiral liquid-crystalline compound is preferably used in the present invention from the viewpoint that the generation of the optical characteristics can be easily controlled. From a similar point of view, a liquid-crystalline compound having no such functional groups as a photoisomerizing group or a photodimerizing group is preferably used in the present invention.

Examples of the rod-like liquid-crystalline compound include azomethine compounds, azoxy compounds, cyanobiphenyl compounds, cyanophenyl esters, benzoate esters, cyclohexanecarboxylic acid phenyl esters, cyanophenylcyclohexane compounds, cyano-substituted phenylpyrimidine compounds, alkoxy-substituted phenylpyrimidine compounds, phenyldioxane compounds, tolan compounds and alkenylcyclohexylbenzonitrile compounds. Not only the low-molecular-weight, liquid-crystalline compound as listed in the above, high-molecular-weight, liquid-crystalline compound may also be used. High-molecular-weight liquid-crystalline compounds may be obtained by polymerizing low-molecular-weight rod-like liquid-crystalline compounds having a polymerizable group. Examples of the low-molecular-weight rod-like liquid-crystalline compounds having polymerizable groups, which are particularly preferably used, include rod-like liquid-crystalline compounds represented by a formula (I) below.

Formula (I): $Q^1\text{-}L^1\text{-}A^1\text{-}L^3\text{-}M\text{-}L^4\text{-}A^2\text{-}L^2\text{-}Q^2$

In the formula(I), $Q^1$ and $Q^2$ respectively represent a reactive group. $L^1$, $L^2$, $L^3$, and $L^4$ respectively represent a single bond or a divalent linking group, and it is preferred that at least one of $L^3$ and $L^4$ represent -O- or -O-CO-O-. $A^1$ and $A^2$ respectively represent a $C_{2\text{-}20}$ spacer group. M represents a mesogen group.

The rod-like liquid-crystalline compound represented by the above formula (I) having a polymerizable group will be further explained in detail as below. In formula (I), $Q^1$ and $Q^2$ respectively represent a polymerizable group. The polymerizable group is preferably capable of addition polymerization or condensation polymerization. Examples of polymerizable groups are shown below.

[Formula 16]

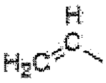 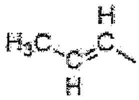 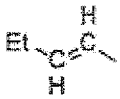 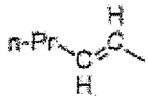

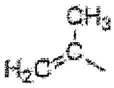 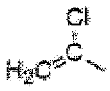 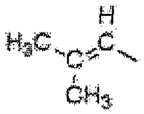 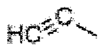

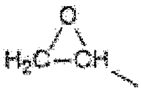 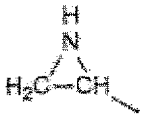

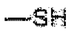 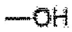 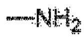

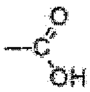 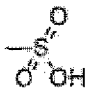 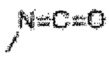 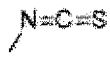

As the divalent linking group represented by each of $L^1$, $L^2$, $L^3$ and $L^4$, a divalent linking group selected from the group consisting of -O-, -S-, -CO-, $-NR^2-$, -CO-O-, -O-CO-O-, $-CO-NR^2-$, $-NR^2-CO-$, -O-CO-, $-O-CO-NR^2-$, $-NR^2-CO-O-$ and $-NR^2-CO-NR^2-$ is preferred. $R^2$ represents a $C_{1-7}$ alkyl group or a hydrogen atom, in which at least one of $L^3$ and $L^4$ is preferably -O- or -O-CO-O- (carbonate group). In the formula(I), each of $Q^1-L^1$ and $Q^2-L^2-$ is preferably $CH_2=CH-CO-O-$, $CH_2=C(CH_3)-CO-O-$ or $CH_2=C(Cl)-CO-O-CO-O-$; and more preferably $CH_2=CH-CO-O-$.

$A^1$ and $A^2$ represent a $C_{2-20}$ spacer groups. Each of $A^1$ and $A^2$ is preferably a $C_{2-12}$ aliphatic group, and more preferably a $C_{2-12}$ alkylene group. The spacer group is preferably selected from chain groups and may contain unadjacent oxygen or sulfur atom. And the spacer group may have at least one substituent such as a halogen atom (fluorine, chlorine or bromine atom), cyano group, methyl group or ethyl group.

Examples of the mesogen group represented by M include any known mesogen groups. The mesogen groups represented by a formula (II) are particularly preferred.

Formula (II): $-(-W^1-L^5)_n-W^2-$

In the formula, each of $W^1$ and $W^2$ represent a divalent cyclic aliphatic group, a divalent aromatic group, or a divalent hetero-cyclic group; and $L^5$ represents a single bond or a linking group. Examples of the linking group represented by $L^5$ include those exemplified as examples of $L^1$ to $L^4$ in the formula (I) and $-CH_2-O-$ and $-O-CH_2-$. In the formula, n represents 1, 2 or 3.

Examples of $W^1$ and $W^2$ include 1,4-cyclohexanediyl, 1,4-phenylene, pyrimidine-2,5-diyl, pyridine-2,5-diyl, 1,3,4-thiazole-2,5-diyl, 1,3,4-oxadiazole-2,5-diyl, naphtalene-2,6-diyl, naphtalene-1,5-diyl, thiaphen-2,5-diyl, pyridazine-3,6-diyl 1,4-Cyclohexanediyl has two stereoisomers, cis-trans isomers, and either isomer may be used and a mixture at an optional ratio may be used. The trans isomer is preferred. $W^1$ and $W^2$ may independently have at least one substituent. Examples the substituent include a halogen atom such as a fluorine, chlorine, bromine or iodine atom; cyano group; a $C_{1-10}$ alkyl group such as methyl, ethyl and propyl; a $C_{1-10}$ alkoxy group such as methoxy and ethoxy; a $C_{1-10}$ acyl group such as formyl and acetyl; a $C_{2-10}$ alkoxycarbonyl group such as methoxy carbonyl and ethoxy carbonyl; a $C_{2-10}$ acyloxy group such as acetyloxy and propionyloxy; nitro group; trifluoromethyl group and difluoromethyl group.

Preferred examples of the basic skeleton of the mesogen group represented by the formula (II) include these described below. And the examples may have at least one substituent selected from the above.

[Formula 17]

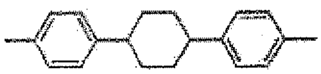
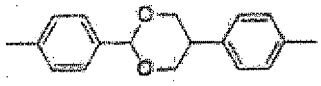
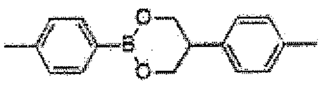
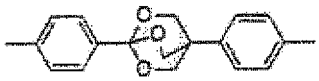
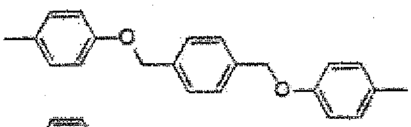
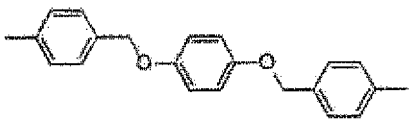
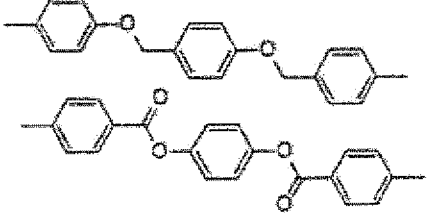
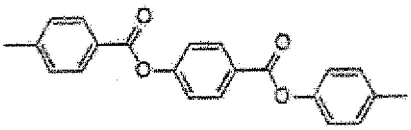
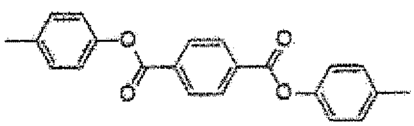
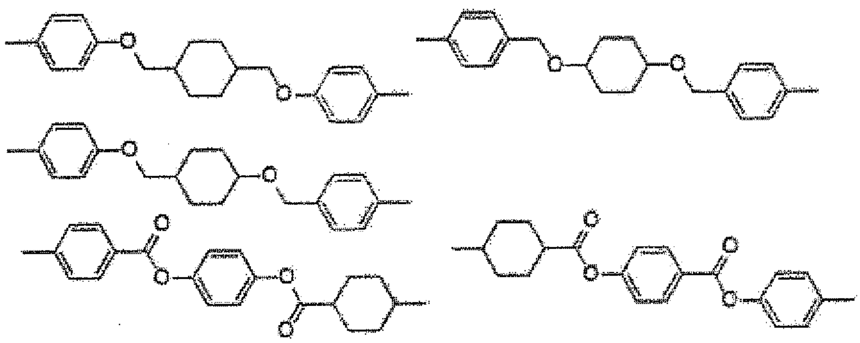
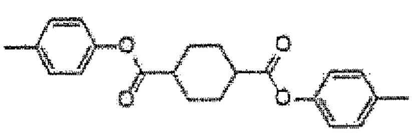
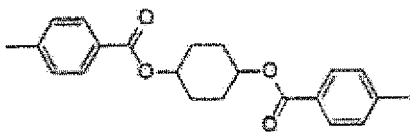

Example the compound represented by the formula (I) include, but not to be limited to, these described below. The compounds represented by the formula (I) may be prepared according to a method described in a gazette of Tokkohyo No. hei 11-513019(WO97/00600).

[Formula 18]

I-1

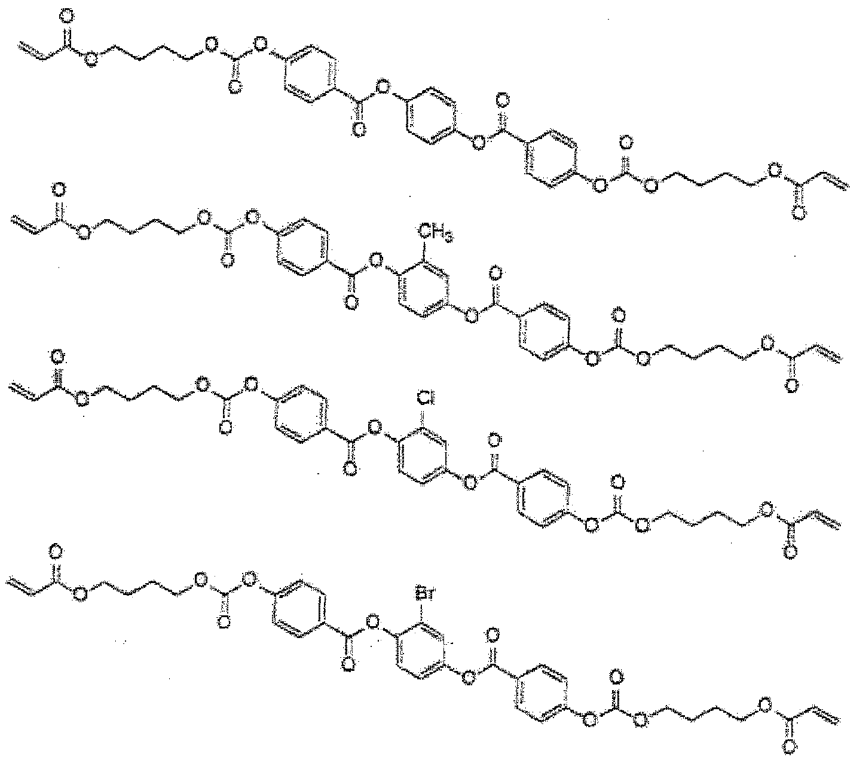

I-2

I-3

I-4

I-5

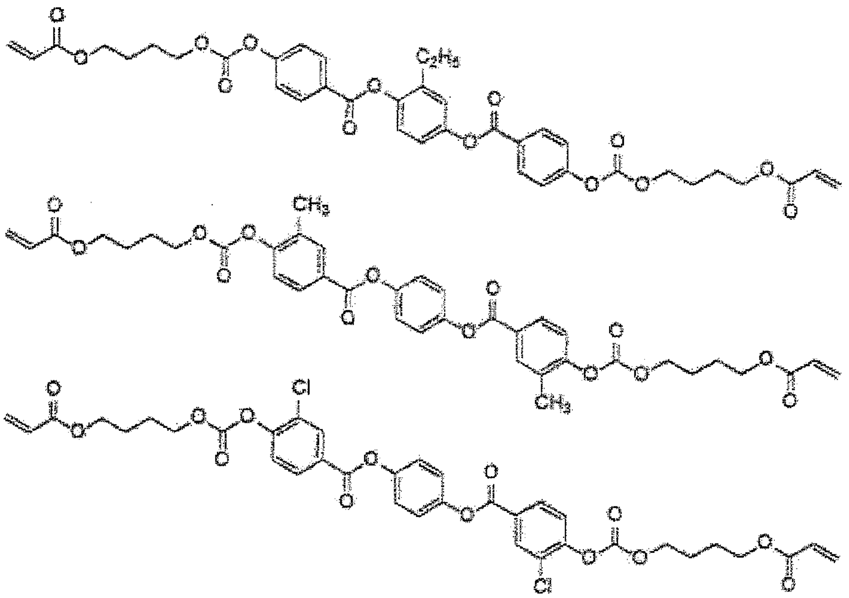

I-6

I-7

[Formula 19]

I-8

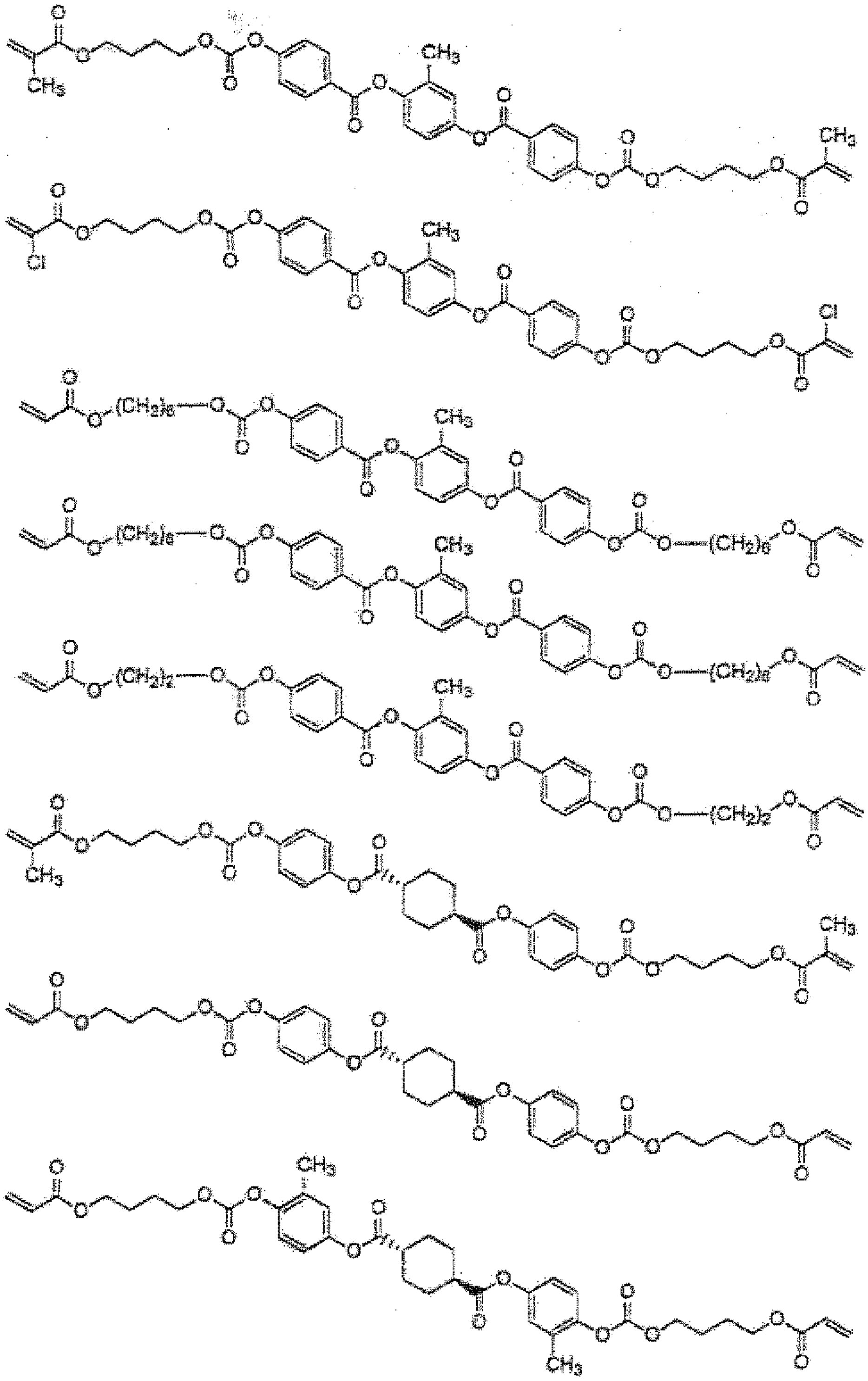

I-9

I-10

I-11

I-12

I-13

I-14

I-15

[Formula 20]

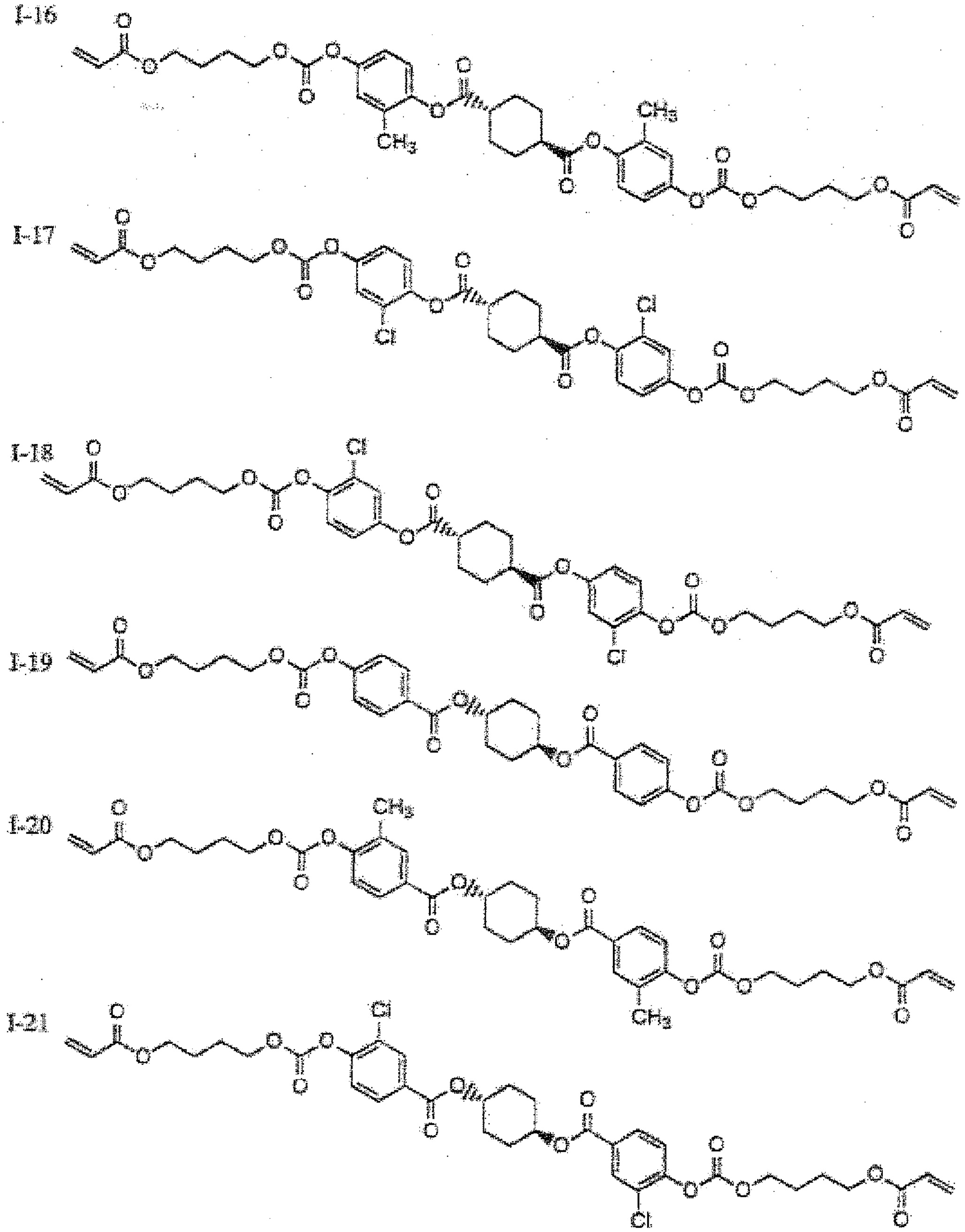

I-16

I-17

I-18

I-19

I-20

I-21

[Formula 21]

I-22

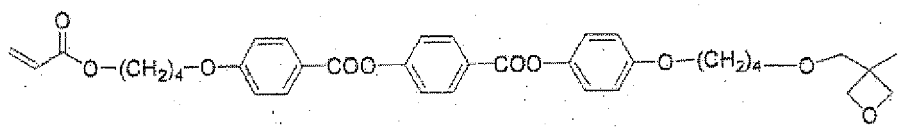

I-23

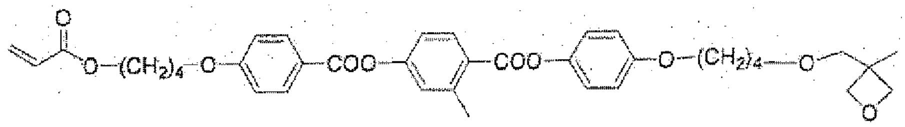

I-24

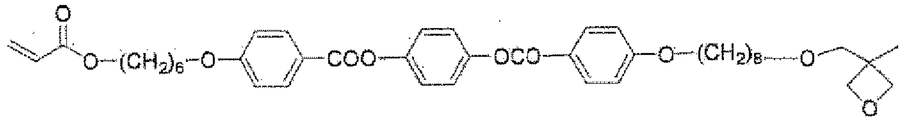

I-25

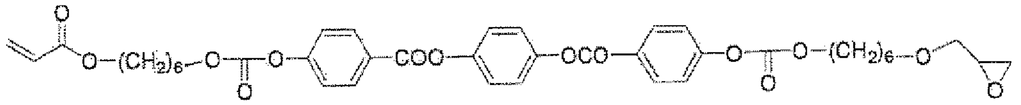

I-26

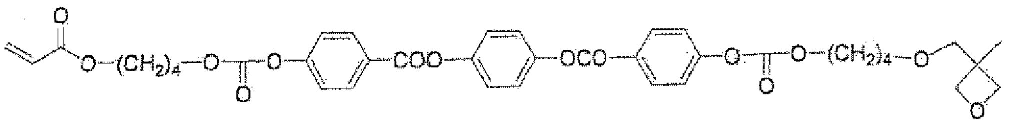

I-27

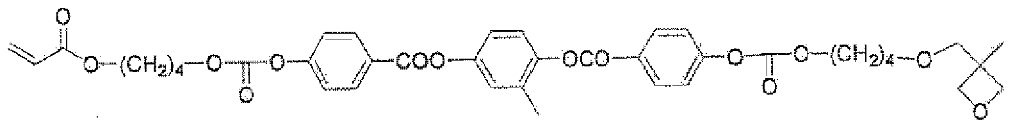

I-28

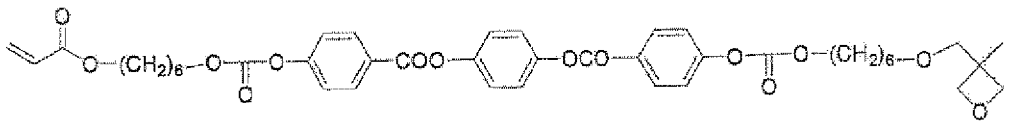

I-29

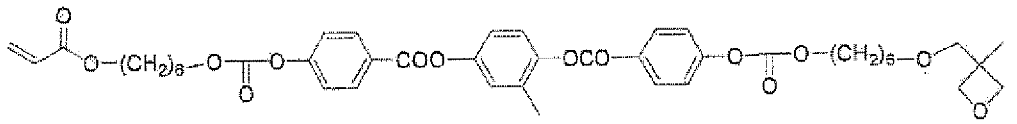

[Formula 22]

(II-25)

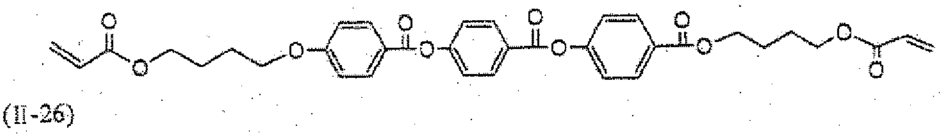

(II-26)

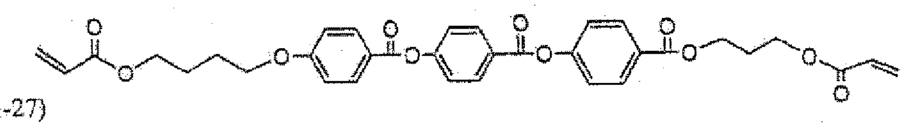

(II-27)

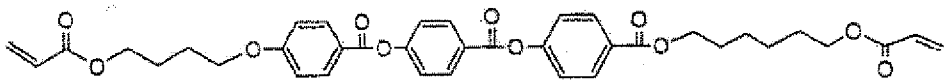

(II-28)

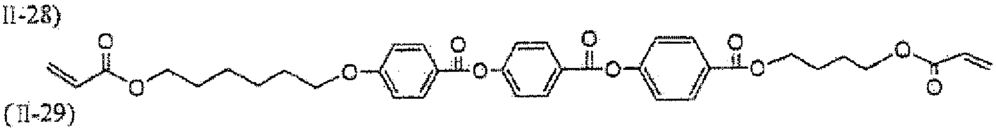

(II-29)

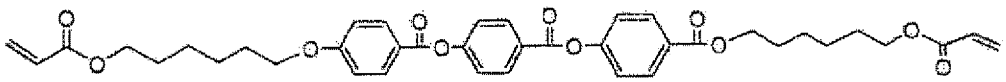

(II-30)

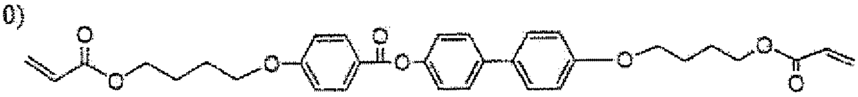

(II-31)

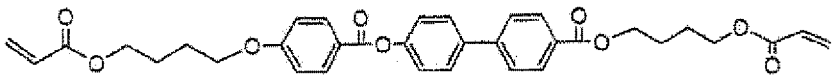

(II-32)

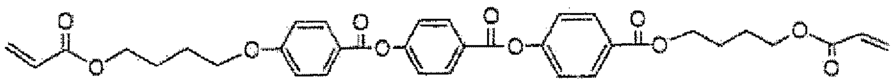

(II-33)

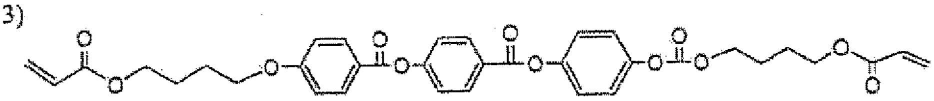

(II-34)

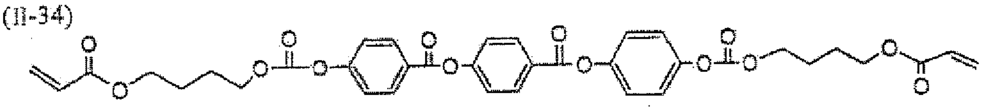

[Formula 23]

(II-35) 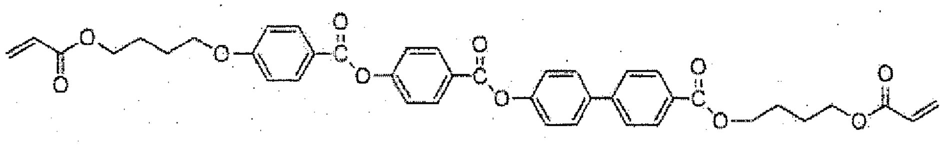

(II-36) 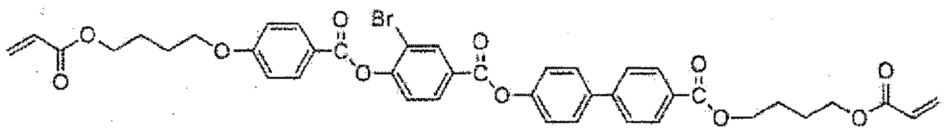

(II-37) 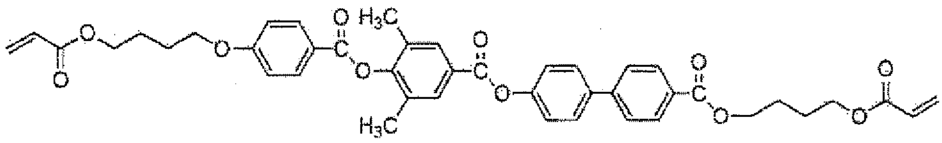

(II-38) 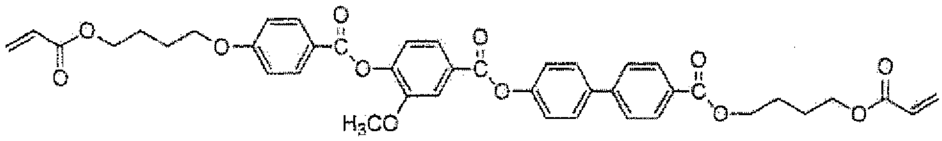

(II-39) 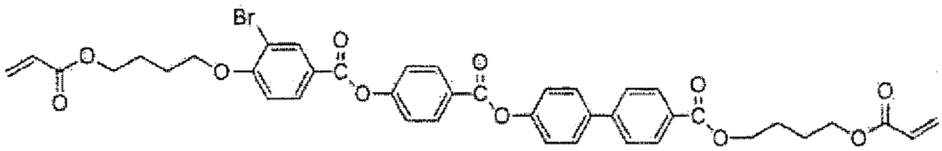

(II-40) 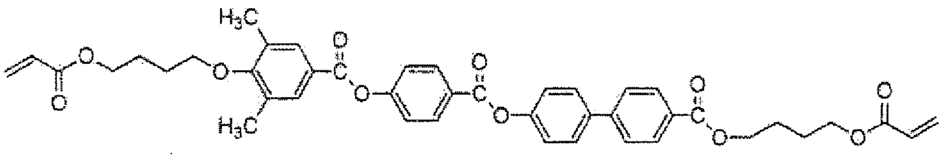

(II-41) 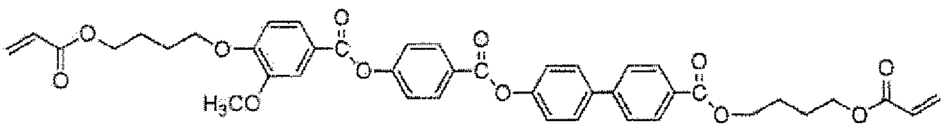

(II-42) 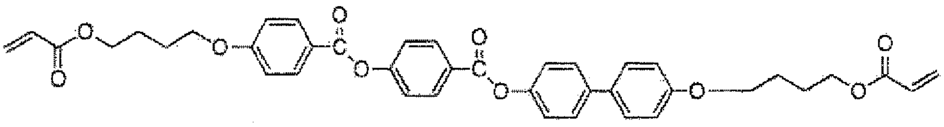

(II-43) 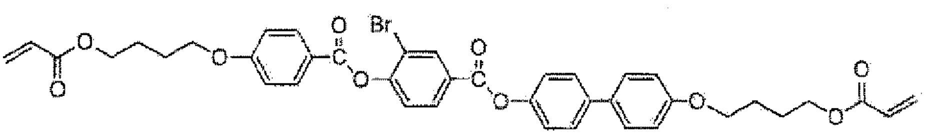

1. -3 Preparation of the liquid-crystalline composition

In the liquid-crystalline composition that is used for the preparation of the optically anisotropic film of the present invention, the content of the optically active compound that satisfies the above-described properties is preferably 5 to 40 weight % and more preferably 10 to 30 weight % of the total weight of the composition (in an composition including solvent in the coating solution, the total weight of the solid components excluding the solvent). When two or more compounds are used, the total weight of the compounds is preferably within the above range. In an embodiment including

a liquid-crystalline compound, the liquid-crystalline compound is preferably 60 to 95 weight % and more preferably 70 to 90 weight % of the total weight of the composition.

In an composition wherein a polymer containing a repeating unit having an optically active partial structure in a side chain and a repeating unit having a mesogenic structure in a side chain is used as the optically active compound, a liquid-crystalline compound does not need to be used separately as already explained above. In such an embodiment, the content of the above polymer is a sum of the contents of the above optically active compound and the liquid-crystalline compound. Specifically, the content is preferably 50 to 99 weight % and more preferably 70 to 99 weight %. Of course, the polymer and the liquid-crystalline compound can be used in combination.

In the embodiment wherein the liquid-crystaliine composition contains the achiral liquid-crystalline compound as well as the above optically active compound, the ratio of the above optically active compound with respect to the achiral liquid-crystalline compound is preferably 10 to 30 weight %. When the ratio of the above optically active compound with respect to the achiral liquid-crystalline compound is 10 weight % or less, the optically anisotropic film may be colored because the reflection wavelength is within the visible range. When the ratio of the above optically active compound with respect to the achiral liquid-crystalline compound is 30 weight % or more, a cholesteric orientation state may not be achieved.

1. -3-1 Additive Agent

The above liquid-crystalline composition may contain an additive agent. Orientation Agent:

The above composition may contain orientation agent to improve the alignment characteristics of the mesogen structure in the polymer used as the optically active compound and the alignment characteristics of the liquid-crystalline compound that is added if desired. For example, the compounds represented by the formulas (1) to (3) described in pages 35 and 36 of WO2006/104252 may be added to promote alignment of the liquid-crystalline compound in a substantially horizontal state. By using such agent in combination with the optically active compound, stable cholesteric orientation can be obtained.

Additive amount of the orientation agent is preferably 0.01 to 20 weight %, more preferably 0.01 to 10 weight %, and particularly preferably 0.02 to 1 weight % of the total weight of the composition (in a composition including solvent in the coating solution, the total weight of the solid components excluding the solvent). The orientation agent may be used alone, or two or more types of the orientation agent may be used in combination.

Polymerization Initiator:

The liquid-crystalline composition used in the present invention is preferably curable. For that purpose, at least one of the above optically active compound and the liquid-crystalline compound that is added if desired can have a polymerizable group. In order to carry out the polymerization reaction rapidly and obtain a cured film with a sufficient hardness, the above liquid-crystalline composition preferably contains a polymerization initiator. The polymerization initiator is selected depending on the polymerization reaction that is intended to proceed. The polymerization reaction may be thermal polymerization reaction using a thermal polymerization initiator or photo-polymerization reaction using a photo-polymerization initiator. Photo-polymerization reaction is preferred. Examples of photo-polymerization initiators include alpha-carbonyl compounds (described in US Patents Nos. 2,367,661 and 2,367,670), acyloin ethers (described in US Patent No. 2,448,828), alpha -hydrocarbon-substituted aromatic acyloin compounds (described in US Patent No. 2,722,512), polynuclear quinone compounds (described in US Patents Nos. 3,046,127 and 2,951,758), combinations of triarylimidazole dimers and p-aminophenyl ketone (described in US Patent No. 3,549,367), acridine and phenazine compounds (described in Japanese Unexamined Patent Publication (KOKAI) syo No. 60-105667 and US Patent No. 4,239,850) and oxadiazole compounds (described in US Patent No. 4,212,970).

The amount of the photo-polymerization initiators to be used is preferably 0.01 to 20 % by weight, more preferably 0.5 to 5 % by weight on the basis of solids in the liquid-crystalline composition.

It is preferable that the liquid-crystalline composition used for the preparation of the optically anisotropic film of the present invention does not contain diachronic photo-polymerization initiators.

The composition used for the preparation of the optically anisotropic film of the present invention is preferably prepared as a coating liquid. The solvent used for preparing the coating liquid is preferably an organic solvents. Examples of organic solvents include amides (e.g., N,N-dimethyl formamide), sulfoxides (e.g., dimethyl sulfoxide), heterocyclic compounds (e.g., pyridine), hydrocarbons (e.g., benzene, hexane), alkyl halides (e.g., chloroform, dichloromethane), esters (e.g., methyl acetate, butyl acetate), ketones (e.g., acetone, methyl ethyl ketone) and ethers (e.g., tetrahydrofuran, 1,2-dimethoxyethane). Among them, alkyl halides and ketones are particularly preferred. Two or more organic solvents may be used in combination.

Not only when the boiling point of the solvent used in the liquid-crystalline composition prepared as a coating liquid is $T_{N1}$ or higher but also when the heating at $T_{N1}$ or higher is not needed for the removal of the solvent (drying) because the boiling point of the solvent is lower than $T_{N1}$, heating may be conducted before the irradiation by a polarized light at $T_1$ that is higher than $T_{N1}$. In-plane retardation can be provided in an efficient manner to the optically anisotropic film produced by heating at $T_1$.

2. The method of manufacturing the optically anisotropic film

The optically anisotropic film of the present invention can be formed by coating a liquid-crystalline composition comprising an optically active compound the torsional force of which is changed by light on a surface, cholesterically orienting it, and irradiating it with polarized light.
In the course of cholesterically orienting the liquid-crystalline composition, it suffices to coat it on the surface of a temporary support or the like from which it can be delaminated following fabrication of a substrate or film.
The composition can be coated on the surface by various conventionally known methods. As set forth further below, when the optically anisotropic film of the present invention is positioned within a liquid-crystal cell and formed in regions corresponding to individual pixels, it is preferably coated on the surface by the ink-jet method.
After coating the composition on the surface, once the coating has dried and the solvent has evaporated, for example, the molecules of an achiral liquid-crystalline compound that is present are cholesterically oriented by the torsional force of the optically active compound. As desired, heat curing can be conducted for 1 to 5 minutes within the liquid-crystal phase temperature range.
In the course of cholesteric orientation to form a cholesteric phase, the liquid-crystalline composition is preferably heated to temperature $T_1$. That is, before irradiation with polarized light, heating is preferably conducted at temperature $T_1$. Further, following heating to temperature $T_1$ and before irradiation with polarized light, the liquid-crystalline composition is set to temperature $T_2$, and preferably radiated by polarized light at the temperature maintained at $T_2$. Temperatures $T_1$ and $T_2$ satisfy relations (XI) and (XII) below:

$$T_{NI} < T_1 < 150^{\circ}C \qquad \text{(XI)}$$

$$T_{CN} < T_2 < T_{NI} \qquad \text{(XII)}$$

In the relations, $T_{NI}$ is the temperature at which the liquid-crystalline composition phase transitions from a cholesteric phase to an isotropic phase, and $T_{CN}$ is the temperature at which the liquid-crystalline composition phase transitions from a crystal phase to a cholesteric phase.
Although not dictated by any specific theory, by maintaining the liquid-crystalline composition at a temperature above $T_{NI}$ in the course of forming a cholesteric phase, the orientation of the optically anisotropic material in the liquid-crystalline composition is rendered random. Subsequently, at the liquid-crystal phase forming temperature (after changing temperature from $T_{CN}$ to $T_{NI}$), an in-plane retardation can be generated in a desirable manner. Further, $T_1$ is preferably set lower than 150°C for the stability of the compound.
When the values of $T_{NI}$ and $T_{CN}$ are known for the liquid-crysfalline composition that is used in the material for the manufacture, they may be employed. However, it suffices to use values determined by measurement prior to the above steps.
The method used to measure $T_{NI}$ and $T_{CN}$ is not specifically limited, and the method conducted as follows may be used. A preparation that has been coated with the liquid-crystalline composition is placed on a hot plate equipped with a temperature-varying device and observed in a crossed Nicol state by using a polarizing microscope. The temperature is increased from the crystal phase. The temperature at which there is a transition from a state where there is birefringence without fluidity to a state where there is birefringence with fluidity will be $T_{CN}$, and the temperature at which there is a transition from a state where there is birefringence and fluidity to a state where birefringence is no longer observed will be $T_{NI}$.
A holding time at $T_1$ may be1 to 30 minutes, and preferably is 2 to 10 minutes. $T_2$ can be $T_{NI}$- 1 to $T_{NI}$ -40°C, and is preferably $T_{NI}$ -10 to $T_{NI}$ - 30°C. A holding time at $T_2$ may be 1 to 30 minutes; and preferably is 2 to 10 minutes.
The cholesterically oriented twisted spiral structure can be distorted by irradiating the composition in a state of cholesteric orientation with polarized light. This distortion is considered to derive from the fact that irradiation with polarized light causes only those molecules in which an isomerizing group is present in the plane of oscillation of the polarized light that is irradiated to undergo isomerization, making the structure change to another state of different torsional force

from that of the state prior to isomerization. The twisted spiral structure in the vicinity of molecules of the optically active compound in that state is distorted by a change in torsional force. As a result, an optically anisotropic film of distorted torsional orientation is obtained. This optically anisotropic film exhibits in-plane anisotropy, which cannot be obtained from a uniform twisted spiral orientation.

To fabricate the optically anisotropic film of the present invention, the magnitude of the energy level and the intensity of illumination of the polarized light that is irradiated can be varied to adjust the degree of in-plane anisotropy. This is because the reaction speed and ultimate reaction rate of isomerization of the photoisomerized group within the molecule of the optically active compound vary and the degree of the change in torsional force of the optically active compound varies based on the magnitude of the energy level and the intensity of illumination of the polarized light that is irradiated. As a result, the degree of distortion of the cholesterically oriented twisted spiral structure varies and the magnitude of the in-plane anisotropy of the optically anisotropic film varies.

In the optically anisotropic film of the present invention, an in-plane slow axis is present in the direction in which the polarized light that is irradiated and the oscillation plane are parallel.

The illumination of the irradiated light is preferably 10 to 1,000 mW/cm$^2$, more preferably 20 to 500 mW/cm$^2$, and further preferably, 50 to 350 mW/cm$^2$. The irradiation energy is preferably 20 mJ/cm$^2$ to 10 J/cm$^2$, more preferably 100 to 800 mJ/cm$^2$. The irradiation wavelength preferably has a peak at 300 to 450 nm, preferably 350 to 400 nm.

When heating is conducted following irradiation with polarized light, the orientation is matured and greater in-plane retardation can be achieved.

This heating temperature is preferably 50 to 250°C, more preferably 50 to 200°C, and more preferably, 70 to 170°C.

In the method of the present invention, a step of irradiation with non-polarized light is preferably not incorporated before the step of irradiation with polarized light. Exclusion of a step of irradiation with non-polarized light is not incorporated before the step of irradiation with polarized light makes it possible to achieve an adequate in-plane retardation. Following irradiation with polarized light, further light irradiation is preferably implemented to improve heat resistance. The light that is irradiated to enhance heat resistance following irradiation with polarized light can be in the form of polarized light or non-polarized light. For curing, the illumination is preferably 20 to 1,000 mW/cm$^2$, more preferably 50 to 500 mW/cm$^2$, and particularly preferably, 100 to 350 mW/cm$^2$. The irradiation energy is preferably 20 mJ/cm$^2$ to 10 J/cm$^2$, more preferably 100 to 800 mJ/cm$^2$. The irradiation wavelength preferably has a peak at 300 to 450 nm, more preferably 350 to 400 nm. When irradiating non-polarized light, a peak is preferably present at 200 to 450 nm, more preferably 250 to 400 nm.

The thickness of the optically anisotropic film of the present invention is preferably 0.1 to 20 μm, preferably 0.5 to 10 μm.

3. The optical characteristics of the optically anisotropic film

The optically anisotropic film of the present invention exhibits in-plane retardation Re, and thus can satisfy the characteristics required of a biaxial film, for example.

Since the optically anisotropic film of the present invention has biaxial properties, it is particularly suited to use in the optical compensation of liquid-crystal display devices in VA mode. A biaxial film is normally understood to have different nx, ny, and nz. An example is a biaxial film exhibiting optical characteristics that satisfy nx > ny > nz. The optically anisotropic film of the present invention is capable of functioning as a biaxial film exhibiting characteristics of an Re (550) of about 20 to 300 nm and an Nz value (where Nz = Rth (550)/Re (550) + 0.5) of about 1.1 to 7.0. That is, the optically anisotropic film of the present invention can replace the conventionally employed biaxial films and be used for optical compensation in liquid-crystal display devices. It is particularly suited to use for optical compensation in VA mode liquid-crystal display devices. When employing the optically anisotropic film of the present invention as a biaxial film (such as in the optical compensation of a VA mode liquid-crystal display device), Nz is preferably 1.5 to 8.0, preferably 2.0 to 7.0.

The in-plane retardation Re (550) at a wavelength of 550 nm is preferably 20 to 300 nm, more preferably 20 to 200 nm, and further preferably, 20 to 100 nm. The Re is a parameter for which a higher value represents greater biaxial properties. The Nz factor is a parameter for which a lower value represents greater biaxial properties. The Re of a biaxial optically anisotropic film required for VA compensation is about 50 nm. When the Re and Nz factor are unsuitable, viewing angle dependency characteristics and the like sometimes deteriorate.

One embodiment of the optically anisotropic film of the present invention is an optically anisotropic film characterized by a reflection wavelength of less than 400 nm and essential transparency to light with wavelengths of 380 to 780 nm. The reflection wavelength is the product of the refractive index of a liquid-crystal material and the pitch of the spiral. The pitch of the spiral is inversely proportional to the quantity added of the optically active compound (functioning as a chiral agent) the torsional force of which is changed by light. That is, the smaller the quantity that is added of the optically active compound the torsional force of which is changed by light, the greater the spiral pitch. The value of the reflection wavelength can be determined by adjusting the quantity added of the optically active compound based on the refractive index of the liquid-crystal material.

When the reflection wavelength of the optically anisotropic film is made longer than the 780 nm of the visible light range, the optical compensation performance of the liquid-crystal display device is sometimes compromised. When the reflection wavelength of the optically anisotropic film falls within the wavelength range of 380 to 780 nm, the optical compensation performance of the liquid-crystal display device is compromised and the optically anisotropic film will substantially have coloration, sometimes compromising transparency.
Further, polarized light is irradiated to fabricate the optically anisotropic film of the present invention. Generally, light in the vicinity of the wavelength of 405 nm, light in the vicinity of 365 nm, and light in the vicinity of 335 nm, which are contained in commonly employed UV irradiation, can be efficiently employed and are thus desirable.
When the above are considered in combination, the reflection wavelength of the optically anisotropic film is preferably less than 400 nm, more preferably less than 360 nm, and particularly preferably, less than 330 nm.
Since the refractive index of a liquid-crystal material is generally about 1.5 to 1.6, the spiral pitch is preferably less than 265 nm, more preferably less than 240 nm, and particularly preferably, less than 220 nm. There is no specific lower limit to the spiral pitch; a value of 80 nm or higher will suffice. To shorten the spiral pitch, the quantity of optically active compound that is added may be increased. However, the addition of an excessive amount has an excessively large effect on the orientation of the liquid-crystalline compound, making it impossible to achieve a state of cholesteric orientation. Thus, the spiral pitch is normally about 80 nm or higher.

4. Uses of the optically anisotropic film

4.-1 In-cell optically anisotropic films

Since the optically anisotropic film of the present invention does not require an alignment film and can achieve desired optical characteristics using polarized light, it is advantageous for formation in individual minute regions. In particular, it is advantageous for formation in areas corresponding to the individual pixels within liquid-crystal cells.
In a film that is formed within liquid-crystal cells, the optical characteristics of the optically anisotropic film are preferably adjusted to the optical characteristics that are optimal for viewing angle compensation individually for incident R, G, and B light. That is, the optical characteristics of the optically anisotropic film that is formed in the region corresponding to the R layer of the color filter layers are preferably adjusted to be optimal for viewing angle compensation for incident R light, the optical characteristics of the optically anisotropic film that is formed in the region corresponding to the G layer of the color filter layers are preferably adjusted to be optimal for viewing angle compensation for incident G light, and the optical characteristics of the optically anisotropic film that is formed in the region corresponding to the B layer of the color filter layers are preferably adjusted to be optimal for viewing angle compensation for incident B light. For example, the optical characteristics of the optically anisotropic film can be adjusted to within the desirable range by means of the type of optically active compound or liquid-crystalline compound employed, the type or quantity of the orientation-regulating agent added, the film thickness, and the polarized light irradiation conditions (the intensity of illumination and the energy level of the polarized light that is irradiated).
Further, the optically anisotropic film per se can be made to function as a color filter. In that case, red, green, and blue dyes or the like can be added to the composition used to form the optically anisotropic film.
The ink-jet method is an example of a method that can be used to form the optically anisotropic film of the present invention in regions corresponding to individual pixels on the surface of a liquid-crystal cell substrate. More specifically, it can be fabricated by coating a fluid containing the optically active compound by the ink-jet method on regions separated by a black matrix, subsequently irradiating the fluid with polarized light to impart desired optical characteristics, and curing it by heating as needed.
An example of the method of fabricating liquid-crystal cells containing the optically anisotropic film of the present invention therein will be described in detail below with reference to Fig. 1.
On a transparent substrate 11 comprised of glass or the like, for example, a dot pattern black matrix 12 (partition walls) is formed by photolithography out of a negative black matrix resist material, forming multiple minute regions "a" separated by partition walls 12 (Fig. 1(a)). In the formation of black matrix 12, neither the material used to form the black matrix nor the formation process is specifically limited. Methods other than photolithography employing a resist material may also be employed so long as they permit the formation of a black matrix pattern. The pattern of black matrix 12 is not limited to a dot pattern, nor is arrangement of the color filter that is formed specifically limited. A dot array, stripe array, mosaic array, delta array, or the like may be employed.
Black matrix 12 is preferably treated with the plasma of a gas containing fluorine atoms ($CF_4$ or the like) following pattern formation and the surface treated to render it ink-repellent, In addition to treatment with plasma, black matrix 12 may be rendered ink-repellent by incorporating an ink-repellent agent in the black matrix material, or by forming the black matrix out of a material exhibiting ink repellency on glass substrate 11.
A fluid 13' containing the above optically active compounds is then discharged from an ink-jet device into the minute regions "a" that have been separated by black matrix 12 that has been rendered ink-repellent, thereby forming

a layer comprised of the fluid within minute regions "a" (Fig. 1(b)). Once discharging of the solution has been completed, a cholesteric orientation is imparted by heat curing. Polarized light is irradiated to distort the twisted spiral structure and impart in-plane anisotropy, thereby forming optically anisotropic film 13 (Fig. 1(c)). Heating may be conducted as needed prior to, during, or after irradiation with polarized light, in which case a heater may be employed.

Ink is discharged a second time in the form of a color filter ink liquid 14' on the first layer of optically anisotropic film 13 that has thus been formed (Fig. 1(d)). This liquid is dried and exposed to light or the like as needed to form a second color filter layer 14 (Fig. 1(e)).

The ink spraying conditions in the course of forming optically anisotropic film 13 and color filter layer 14 are not specifically limited. When the fluid used to form the optically anisotropic film and the ink used to form the color filter layer are of high viscosity, lowering the viscosity of the ink at room temperature or by heating (to 20 to 70°C, for example) prior to spraying is desirable from the perspective of stable spraying. Variation in the viscosity of the ink and the like significantly affect the size of the droplets and the droplet spraying rate, compromising quality. Thus, it is desirable to maintain the ink and the like at as constant a temperature as possible.

The ink-jet head (simply "head" hereinafter) is not specifically limited. Various known heads may be employed. Continuous and dot-on-demand heads may be employed. Among dot-on-demand heads, thermal heads having an operating valve such as that described in Japanese Unexamined Patent Publication (KOKAI) Heisei No. 9-323420 for discharge are preferable. Among piezo heads, for example, the heads described in European Patent Publications A277,703 and A278,590 can be employed. The head preferably has a temperature-adjusting function permitting management of the temperature of the composition. The spraying temperature is preferably set so that the viscosity at the time of spraying is 5 to 25 mPa·s, and the temperature of the composition is preferably controlled so that the range of variation in viscosity is kept to within $\pm$ 5 percent. The operation is preferably conducted so that the driving frequency is 1 to 500 kHz.

The order in which optically anisotropic film 13 and color filter layer 14 are formed may be inverted. That is, the configuration may be such that optically anisotropic film 13 is laminated over color filter layer 14. Such a form may be fabricated by reversing the order of the step of forming optically anisotropic film 13 and the step of forming color filter layer 14 in the above-described example of the manufacturing method.

Further, the optically active compound may be mixed into the ink used to form the color filter for use.

Optically anisotropic film 13 may be formed with a fluid in the form of a single solution or the like, or may be formed with fluids containing different materials and/or different bending proportions so that optimal optical anisotropy is achieved based on the hue of the color filter layer 14 that is formed over it. When different solutions or the like based on the hue of the color filter layer to be formed thereover are employed when forming optically anisotropic film 13, the various solutions may be dried simultaneously once they have all been discharged, or a process may be employed whereby they are discharged and dried one at a time. In the formation of color filter layer 14, all of the inks used to form the R, G, and B layers may be discharged and then simultaneously dried, or a process may be employed where they are discharged and dried one at a time. The colors of the color filters are not necessarily limited to the three colors of red, green, and blue; color filters of multiple primary colors may be employed.

Once an optically anisotropic film and color filter layers have been formed in each of the regions partitioned by black matrix 12 in a manner corresponding to the individual pixels of the first substrate in this fashion, the first substrate and a second substrate are bonded together. Prior to bonding, a transparent electrode layer and/or an orienting layer may be formed on color filter layer 14. For example, as described in Japanese Unexamined Patent Publication (KOKAI) Heisei No. 11-243821 and Japanese Patent Publication No. 3,255,107, colored resin compositions forming the color filter can stacked to form a mound, a transparent electrode can be formed on the mound, and as needed, protrusions for separated orientation can be stacked thereon to form a spacer, which is preferable from the perspective of cutting costs.

A liquid-crystal material can be injected into the hollow areas between the opposing surfaces of the first and second substrates to form a liquid-crystal layer, thereby fabricating liquid-crystal cells. The first substrate is preferably disposed with the surface on which the optically anisotropic film and color filter layer are formed being inside, that is, being the opposing surface. Subsequently, polarizing plates, optical compensation films, and the like can be adhered to the exterior surfaces of both substrates to fabricate a liquid-crystal display device.

In the above example of the manufacturing method, the fluid for forming the optically anisotropic film and the ink for forming the color filter layer are disposed at prescribed positions by the ink-jet method after forming partitions in the form of the black matrix. Thus, it is possible to accurately form the optically anisotropic film and color filter layer in prescribed regions on the first substrate. Accordingly, a manufacture is possible with a small number of steps without making the structure complex.

In the present method, an example has been described in which ink is discharged by the ink-jet method to form an optically anisotropic film and a color filter layer in individual minute regions. However, they can be formed by a method other than the ink-jet method, such as by printing method.

When adjusting the in-plane anisotropy (in-plane retardation Re) of the optically anisotropic film by means of the intensity of illumination and the energy level of the polarized light that is irradiated, the thickness of the optically

anisotropic film may be constant, and the optically anisotropic film can be formed by a coating method such as the slit coating method or bar coating method. In that case, an optically anisotropic film of uniform thickness can be formed first, the black matrix can be formed next, and the color filter layer can be formed in that sequence to reduce the number of steps in manufacturing.

4.-2 The liquid-crystal cell

The present invention also relates to a liquid-crystal cell substrate comprised of a substrate on which the optically anisotropic film of the present invention is disposed. One embodiment of the liquid-crystal cell substrate of the present invention is comprised of a substrate, the optically anisotropic film of the present invention to compensate for the viewing angle of the liquid-crystal cell, and a color filter layer. Therein, the optically anisotropic film has optical characteristics that are optimal for viewing angle compensation of the liquid-crystal cell based on the hue (for example, for each of the colors of R, G, and B) of the color filter layer that is disposed above or below it. The material of the substrate is not specifically limited other than that it be transparent. For example, metal supports, laminated metal supports, glasses, ceramics, synthetic resin films, and the like can all be employed. Since a low refractive index is preferable, glass and low-refractive-index polymers are preferable. Additionally, an alignment film having the ability to control the orientation of the liquid-crystal material, and a transparent electrode layer, can be formed on the surface of the substrate.

A second optically anisotropic film may be present on the opposite surface of the liquid-crystal cell substrate of the present invention from the side on which the optically anisotropic film is formed (the surface on the side disposed to the outside of the liquid-crystal cells when assembled into a liquid-crystal display device). The second optically anisotropic film contributes to optical compensation of the liquid-crystal cells along with the optically anisotropic film of the present invention disposed inside the liquid-crystal cells. The preferable ranges of the optical characteristics of the second optically anisotropic film will vary with the mode of the liquid-crystal display device in which it is employed. For example, in the case of a liquid-crystal cell substrate for use in VA mode, the optically anisotropic film of the present invention may be disposed on the inside surface of the substrate and the second optically anisotropic film may be disposed on the outside surface of the substrate.

Fig. 2 shows a schematic sectional view of an example of a liquid-crystal cell having the liquid-crystal cell substrate of the present invention.

In the liquid-crystal cell substrate shown in Fig. 2(a), a black matrix 22 is formed as a partition on a transparent substrate 21. A patterned color filter layer 23 and an optically anisotropic film 27 are formed by ink-jet discharging within the minute regions separated by the partitions. A transparent electrode layer 25 and an alignment layer 26 are present thereover. Fig. 2 shows a liquid-crystal cell substrate in which R, G, and B color filter layers 23 are formed, but it is also possible to form a color filter layer comprised of R, G, B, and W (white) layers. Optically anisotropic film 27 is divided into r, g, and b regions that have retardation characteristics that are optimal for the respective hues of R, G, and B of filter layer 23.

A second optically anisotropic film 24 contributing to optical compensation along with optically anisotropic film 27 can be disposed on the outside surface of the liquid-crystal cell substrate as shown in Fig. 2(b). Second optically anisotropic film 24 can be disposed on the substrate of the color filter side along with in-cell optically anisotropic film 27, or, although not shown, can be disposed on the opposing substrate. Generally, drive electrodes such as a TFT array are often disposed on the opposing substrate, but disposition is possible anywhere on the opposing substrate. In the case of an active drive type with TFT, the optically anisotropic film is preferably positioned higher than the silicon layer in view of heat resistance of the optically anisotropic film.

4. -3 The liquid-crystal display device

The present invention further relates to a liquid-crystal display device having the optically anisotropic film of the present invention. The optically anisotropic film can be disposed outside the liquid-crystal cells, or between the liquid-crystal cells and a polarizer. As set forth above, it can also be disposed within the liquid-crystal cells. The liquid-crystal display device may have a second optically anisotropic film contributing to optical compensation along with the optically anisotropic film of the present invention.

Fig. 3 is a schematic sectional view of an example of the liquid-crystal display device of the present invention.

The examples of Figs. 3(a) and (b) are liquid-crystal display devices in which the substrates of Figs. 2(a) and (b) are employed as the upper substrate, respectively, glass substrates 21, each having a transparent electrode layer 25 with TFT 32 and an alignment layer 26 thereover, are disposed as opposing substrates, and a liquid-crystal cell 37 containing liquid crystals 31 is sandwiched therebetween. On both sides of liquid-crystal cell 37 are disposed polarizing plates 36 each comprised of a polarizing layer 33 sandwiched between protective layers 34 and 35 comprised of cellulose acetate (TAC) films or the like. The protective layer 35 on the liquid-crystal cell side can be a high-polymer film such as a TAC film that satisfies the optical characteristics of an optical compensation sheet, or can be comprised of the same high-polymer film as protective layer 34. Although not shown in the figure, in a reflective liquid-crystal display device, it suffices to dispose only one polarizing plate on the viewing side, and to position a reflective film on the back surface of the liquid-crystal cell or on the inner surface of the lower substrate of the liquid-crystal cell. A front light can also be disposed on the viewing side of the liquid-crystal cell. A semi-transmitting form, in which a transmitting portion and a reflecting portion are provided within each pixel of the display device, is also possible. The display mode of the present liquid-crystal display device is not specifically limited; it can be used in any transmitting type, semi-transmitting type, and reflecting type liquid-crystal display devices. Among these, the present invention produces its effect in VA mode, in which improved color viewing angle characteristics are desired.

One example of the liquid-crystal display device of the present invention is a VA mode liquid-crystal display device. VA mods liquid-crystal display devices are known in which a negative C-plate and an A-plate are used for optical compensation, and in which a single biaxial film is used for optical compensation. The optically anisotropic film of the present invention can be used as a biaxial film.

The example of a VA-mode liquid-crystal display device has been described above. However, the optically anisotropic film of the present invention can also be used for optical compensation in liquid-crystal display devices employing other modes. TN-mode liquid-crystal cell retardation plates (optical compensation sheets) are described in Japanese Unexamined Patent Publication (KOKAI) Heisei No. 6-214116, U.S. Patents 5,583,679 and 5,646,703; and German Patent 3,911,620A1. IPS-mode and FLC-mode liquid-crystal cell retardation plates (optical compensation sheets) are described in Japanese Unexamined Patent Publication (KOKAI) Heisei No. 10-54982. OCB-mode and HAN-mode liquid-crystal cell retardation plates (optical compensation sheets) are described in U.S. Patent 5,805,253 and International Publication WO 96/37804. STN-mode liquid-crystal cell retardation plates (optical compensation sheets) are described in Japanese Unexamined Patent Publication (KOKAI) Heisei No. 9-26572. VA-mode liquid-crystal cell retardation plates (optical compensation sheets) are described in Japanese Patent No. 2,866,372. The optically anisotropic film of the present invention can be used in place of these optical compensation sheets.
Use of the optically anisotropic film of the present invention is also effective in combination with polarizing plates to prevent reflection in electroluminescent devices, field emission display devices, and the like.

## EXAMPLES

Paragraphs below will more specifically describe the present invention referring to Examples. Any materials, reagents, amount and ratio of use and operations shown in Examples may appropriately be modified without departing from the spirit of the present invention. It is therefore understood that the present invention is by no means limited to specific Examples below.

(Example 1)

Preparation of a substrate for liquid crystal cell:

A substrate that has black matrix on a non-alkali glass substrate was prepared.

Preparation of Coating Liquid LC-1 for Optically Anisotropic film:

The composition below was prepared, filtered through a polypropylene filter having a pore size of 0.2 μm, and the filtrates were used as coating liquid LC-1 for forming an optically anisotropic film.

LC-1-1 was synthesized according to the method described in Tetrahedron Lett., Vol. 43, p.6793(2002).

Composition of Coating Liquid LC-1 for Optically Anisotropic film:

| | |
|---|---|
| Polymerizable liquid crystal | |
| Example compound I-2 | 17.4% by weight |
| Optically active compound | |
| Example compound C-2 | 2.6% by weight |
| 1,4-butandiol acetate | 79.28% by weight |
| Horizontal orientation agent represented by the following formula (LC-1-1) | 0.02% by weight |
| Irg-907, from Ciba Specialty Chemicals) | 0.5% by weight |
| DETX, from Nippon Kayaku Co., Ltd. | 0.2% by weight |

[Formula 24]

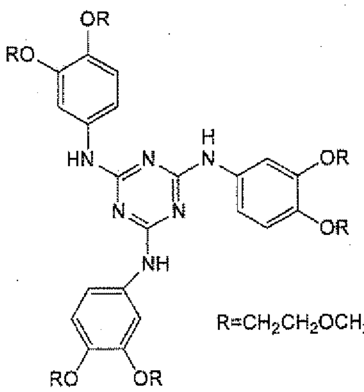

$R=CH_2CH_2OCH_2CH_2C_6F_{13}$

LC-1-1

Composition for color filter:

A composition for each of RGB pixel having the composition as shown in Table 1 was prepared.

[Table 1]

| (% by weight) | PP-R1 | PP-G1 | PP-B1 |
|---|---|---|---|
| R pigment dispersion-1 | 44 | - | - |
| R pigment dispersion-2 | 5.0 | - | - |
| G pigment dispersion | - | 24 | - |
| CF Yellow EC3393 (from Mikuni Color Works, Ltd.) | - | 13 | - |
| CF Blue EC3357 (from Mikuni Color Works, Ltd.) | - | - | 7.2 |
| CF Blue EC3383 (from Mikuni Color Works, Ltd.) | - | - | 13 |
| propylene glycol monomethyl ether acetate (PGMEA) | 7.6 | 29 | 23 |
| methyl ethyl ketone | 37.412 | 25.115 | 35.78 |
| cyclohexanone | - | 1.3 | - |
| binder 1 | - | 2.9 | - |
| binder 2 | 0.7 | - | - |
| binder 3 | - | - | 16.9 |
| DPHA solution | 4.4 | 4.3 | 3.8 |
| 2-trichloromethyl-5-(p-styrylstyryl)-1,3,4-oxadiazo le | 0.14 | 0.15 | 0.15 |
| 2,4-bis(trichloromethyl)-6-[4-(N,N-diethoxycarbonylmethyl)-3-bromophenyl]-s-triazine | 0.058 | 0.060 | - |
| phenothiazine | 0.010 | 0.005 | 0.020 |
| hydroquionone monomethyl ether | - | - | - |
| triarylsulfonium hexafluoroantimonate | 3.37 | 2.00 | 2.00 |
| HIPLAAD ED152 (from Kusumoto Chemicals) | 0.52 | - | - |

(continued)

| (% by weight) | PP-R1 | PP-G1 | PP-B1 |
|---|---|---|---|
| Megafac F-176PF (from Dainippon Ink and Chemicals, Inc.) | 0.060 | 0.070 | 0.050 |

Compositions listed in Table 1 are as follows.

[Composition of R Pigment Dispersion-1]

| | |
|---|---|
| C.I.Pigment Red 254 | 8.0% by weight |
| 5-[3-oxo-2-[4-[3,5-bis(3-diethyl aminopropylaminocarbonyl)phenyl]aminocarbonyl] phenylazo]-butyroylaminobenzimidazolone | 0.8% by weight |
| random copolymer of benzyl methacrylate/methacrylic acid (72/28 by molar ratio, weight-average molecular weight=37,000) | 8.0% by weight |
| propylene glycol monomethyl ether acetate | 83.2% by weight |

[Composition of R Pigment Dispersion-2]

| | |
|---|---|
| C.I.Pigment Red 177 | 18.0 by weight |
| random copolymer of benzyl methacrylate/methacrylic acid (72/28 by molar ratio, weight-average molecular weight=37,000) | 12.0 by weight |
| propylene glycol monomethyl ether acetate | 70.0 by weight |

[Composition of G Pigment Dispersion]

| | |
|---|---|
| C.I.Pigment Green 36 | 18.0 by weight |
| random copolymer of benzyl methacrylate/methacrylicacid (72/28 by molar ratio,weight-average molecular weight=37,000) | 2.0 by weight |
| cyclohexanone | 35.0 by weight |
| propylene glycol monomethyl ether acetate | 35.0 by weight |

[Composition of Binder 1]

| | |
|---|---|
| random copolymer of benzyl methacrylate/methacrylic acid (78/22 by molar ratio, weight-average molecular weight=40,000) | 27.0 by weight |
| propylene glycol monomethyl ether acetate | 73.0 by weight |

[Composition of Binder 2]

| | |
|---|---|
| random copolymer of benzyl methacrylate/methacrylic acid/methyl methacrylate (38/25/37 by molar ratio, weight-average molecular wight=30,000) | 27.0 by weight |
| propylene glycol monomethyl ether acetate | 73.0 by weight |

[Composition of Binder 3]

| | |
|---|---|
| random copolymer of benzyl methacrylate/methacrylic acid/methyl methacrylate(36/22/42 by molar ratio, weight-average molecular weight=30,000) | 27.0 by weight |
| propylene glycol monomethyl ether acetate | 73.0 by weight |

[Composition of DPHA]

| | |
|---|---|
| KAYARAD DPHA (from Nippon Kayaku Co., Ltd.) | 76.0 by weight |
| propylene glycol monomethyl ether acetate | 24.0 by weight |

Preparation of Coating Liquid PP-R1 for forming R Layer:

Coating liquid PP-R1 for forming R layer was obtained first by weighing R pigment dispersion-1, R pigment dispersion-2 and propylene glycol monomethyl ether acetate listed in Table 1 according to the amounts listed therein, mixing them at 24°C (±2°C), stirring the mixture at 150 rpm for 10 minutes, weighing methyl ethyl ketone, binder 2, DPHA solution, 2-trichloromethyl-5-(p-styrylmethyl)-1,3,4- oxadiazole, 2,4-bis (trichloromethyl)-6-[4-(N,N- diethoxycarbonylmethyl)-3-bromophenyl]-s-triazine, phenothiazine, and diphenyliodonium hexafluorophosphate according to the amounts listed in Table 1, adding them to the mixture in this order at 24°C (±2°C), stirring the mixture at 150 rpm for 10 minutes, weighing ED152 according to the amount listed in Table 1, adding it to the mixture at 24°C (+2°C), stirring the mixture at 150 rpm for 20 minutes, weighing Megafac F-176PF according to the amount listed in Table 1, adding it to the mixture at 24°C (±2°C), stirring the mixture at 30 rpm for 30 minutes, and filtering the mixture through a #200 nylon mesh.

Preparation of Coating Liquid PP-G1 for forming G Layer:

Coating liquid PP-G1 for forming G layer was obtained first by weighing G pigment dispersion, CF Yellow EX3393 and propylene glycol monomethyl ether acetate according to the amounts listed in Table 1, mixing them at 24°C (±2°C), stirring the mixture at 150 rpm for 10 minutes, then weighing methyl ethyl ketone, cyclohexanone, binder 1, DPHA solution, 2-trichloromethyl-5-(p-styrylmethyl)-1,3,4-oxadiazole, 2,4-bis (trichloromethyl)-6-[4-(N,N- diethoxycarbonylmethyl)-3-bromophenyl]-s-triazine, phenothiazine, and diphenyliodonium hexafluorophosphate according to the amounts listed in Table 1, adding them to the mixture in this order at 24°C (±2°C), stirring the mixture at 150 rpm for 30 minutes, then weighing Megafac F-176PF according to the amount listed in Table 1, adding it to the mixture at 24°C (±2°C), stirring the mixture at 30 rpm for 5 minutes, and filtering the mixture through a #200 nylon mesh.

Preparation of Coating Liquid PP-B1 for forming B Layer:

Coating liquid PP-B1 for forming B layer was obtained first by weighing CF Blue EX3357, CF Blue EX3383 and propylene glycol monomethyl ether acetate according to the amounts listed in Table 1, mixing them at 24°C (±2°C), stirring the mixture at 150 rpm for 10 minutes, then weighing methyl ethyl ketone, binder 3, DPHA solution, 2-trichloromethyl-5-(p-styrylmethyl)-1,3,4-oxadiazole, phenothiazine, and diphenyliodonium hexafluorophosphate according to the amounts listed in Table 2, adding them to the mixture in this order at 25°C (±2°C), stirring the mixture at 40°C (±2°C) at 150 rpm for 30 minutes, then weighing Megafac F-176PF according to the amount listed in Table 1, adding it to the mixture at 24°C (±2°C), stirring the mixture at 30 rpm for 5 minutes, and filtering the mixture through a #200 nylon mesh.

Preparation of Optically Anisotropic Film:

As the optically anisotropic film R-1 for R layer, the coating liquid LC-1 for optically anisotropic film obtained as above was sprayed by using piezo head in the concave part where R layer surrounded by black matrix (light blocking wall) was intended to be formed, and heated and dried at 140°C for two minutes. Immediately after being matured at 65°C for two minutes, the layer was irradiated by a polarized UV light (illuminance=200 $mW/cm^2$, illumination energy=200 $mJ/cm^2$). The layer was further matured by heating at 130°C to form an optically anisotropic film R-1 having thickness

of 2.8 μm, a reflection wavelength of 265 nm, and a spiral pitch of 170 nm.

In a similar manner, optically anisotropic films G-1 and B-1 for G layer and B layer were formed in the micro regions where G-layer and B-layer were intended to be formed, respectively. By using the coating liquid LC-1 for optically anisotropic film, the amount for the spray was changed between the layers to form the layers in the thicknesses of 2.9 μm and 2.6 μm for optically anisotropic films G-1 and B-1, respectively. The reflection wavelengths were 235 nm and 205 nm, and spiral pitches were 152 nm and 132 nm, respectively.

In this example, each coating liquid for optically anisotropic film was sprayed in the concave part corresponding to the desired R, G, or B to form each of R, G and B pixel, by controlling the delivery speed and the driving frequency.

Measurement of Retardation:

In-plane retardation Re(550) at an measurement wavelength λ=550 nm and retardation while inclining the sample by ±40° using the slow axis as the axis of rotation were measured using a fiber-type spectrometer (KOBRA 21ADH or WR manufactured by Oji Scientific Instruments) based on the parallel Nicol method. Further, Rth(550) and Nz value were calculated.

Retardation of the optically anisotropic film was obtained by calibration with transmission data of the substrate without optically anisotropic film measured beforehand. Results of the retardation measurements are shown in Table 2.

[Table 2]

| optically anisotropic film | Re(550) | Nz value |
|---|---|---|
| R-1 | 46 nm | 3.2 |
| G-1 | 49 nm | 3.9 |
| B-1 | 34 nm | 5.6 |

The results in Table 2 show that the optically anisotropic films R-1, G-1, and B-1 that were formed as above are biaxial.

Hear resistance test:

Re(550) retention rate (variability) before and after the heating treatment at 230 °C for 3 hours are obtained for the optically anisotropic films formed as above. Re(550) retention rate is a ratio of Re(550) after the heating treatment with respect to Re(550) before the heating treatment. Results of the Re(550) retention rate are shown in Table 3.

[Table 3]

| optically anisotropic film | Re(550) retention rate |
|---|---|
| R-1 | 83% |
| G-1 | 85% |
| B-1 | 87% |

Preparation of a color filter:

The coating liquids PP-R1, PP-G1, and PP-B1 for forming R, G and B layers obtained as above were sprayed by using piezo head, in the predetermined positions of concave part surrounded by light blocking wall to form R layer, G layer, and B layer.

In this example, each of the coating liquids PP-R1, PP-G1, and PP-B1 for forming R, G and B layers was sprayed in the concave part corresponding to the desired R, G, or B to form each of R, G and B pixel, by controlling the delivery speed and the driving frequency.

Subsequently, the layers were dried at 100°C, and further subjected to one-hour heating treatment at 200°C to form color filter pixels on the optically anisotropic film.

Formation of Transparent Electrode:

On the above-produced color filter, a transparent electrode film (thickness of 2000 Angstrom) was formed by sputtering of an ITO target.

Formation of Alignment layer and Liquid Crystal Cell:

Further thereon, a polyimide orientation film was provided. Glass beads of diameters 5μm were then dispersed. An epoxy polymer sealing material containing spacer grains was printed at positions corresponding to the outer contour of the black matrix provided around the pixel group, and the color filter substrate and the opposing substrate were attached under a pressure of 10 kg/cm. Thus attached glass substrates were then annealed at 150°C for 90 minutes so as to allow the sealing material to cure, and thereby a stack of two glass substrates was obtained. The stack of the glass substrates was degassed in vacuo, and a liquid crystal was introduced therebetween by recovering the atmospheric pressure, to thereby obtain a liquid crystal cell. On both surfaces of the liquid crystal cell, polarizer plates HLC2-2518 from Sanritz Corporation were respectively attached.

Production of VA-LCD:

A three-band-phosphor-type white fluorescent lamp having an arbitrary color tone was produced as a cold-cathode-tube back light for color liquid crystal display device, using a phosphor composed of a 50:50 mixture on the weight basis of $BaMg_2Al_{16}O_{27}$:Eu,Mn and $LaPO_4$:Ce,Tb for green (G), $Y_2O_3$:Eu for red (R), and $BaMgAl_{10}O_{17}$:Eu for blue (B). The above-described liquid crystal cell having the polarizer plates bonded thereto was disposed on this back light, to thereby produce VA-LCD of Example 1.

(Example 2)

Composition of Coating Liquid LC-2 for Optically anisotropic film:

| | |
|---|---|
| Polymer Example compound P-3 | 20.0% by weight |
| 1,4-butandiol acetate | 79.28% by weight |
| Horizontal orientation agent LC-1-1 | 0.02% by weight |
| Irg-907, from Ciba Specialty Chemicals) | 0.5% by weight |
| DETX, from Nippon Kayaku Co., Ltd. | 0.2% by weight |

The optically anisotropic films R-2, G-2, and B-2 were formed in a similar manner to that of Example 1, except polymer P-3 was used instead of the polymerizable liquid crystal I-2 and the optically active compound C-2 in the composition of coating liquid LC-1 for optically anisotropic film. Retardations of the optically anisotropic films obtained as above were measured in the same manner as that of Example 1. Results of the retardation measurements are shown in Table 4.

[Table 4]

| optically anisotropic film | Re(550) | Nz value |
|---|---|---|
| R-2 | 47 nm | 3.1 |
| G-2 | 50 nm | 3.8 |
| B-2 | 35 nm | 5.5 |

The results in Table 4 show that the optically anisotropic films R-2, G-2, and B-2 that were formed as above are biaxial.

VA-LCD of Example 2 was produced in a similar manner to that of Example 1 except the optically anisotropic film was prepared by using composition of coating liquid LC-2 for optically anisotropic film.

(Example 3)

Composition of Coating Liquid LC-3 for Optically anisotropic film:

| | |
|---|---|
| Polymerizable liquid crystal | |
| Example compound I-2 | 17.4% by weight |
| optically active compound C-3 | 2.6% by weight |
| 1,4-butandiol acetate | 79.28% by weight |
| Horizontal orientation agent LC-1-1 | 0.02% by weight |
| Irg-907, from Ciba Specialty Chemicals) | 0.5% by weight |
| DETX, from Nippon Kayaku Co., Ltd. | 0.2% by weight |

The optically anisotropic films R-3, G-3, and B-3 were formed in a similar manner to that of Example 1, except optically active compound C-3 was used instead of the optimally active compound C-2 in the composition of coating liquid LC-1 for optically anisotropic film. Retardations of the optically anisotropic films obtained as above were measured in the same manner as that of Example 1. Results of the retardation measurements are shown in Table 5.

[Table 5]

| optically anisotropic film | Re(550) | Nz value |
|---|---|---|
| R-3 | 49 nm | 2.9 |
| G-3 | 52 nm | 3.6 |
| B-3 | 37 nm | 5.3 |

The results in Table 5 show that the optically anisotropic films R-3, G-3, and B-3 that were formed as above are biaxial.

VA-LCD of Example 3 was produced in a similar manner to that of Example 1 except the optically anisotropic film was prepared by using composition of coating liquid LC-3 for optically anisotropic film.

(Example 4)

Composition of Coating Liquid LC-4 for Optically anisotropic film:

| | |
|---|---|
| Polymerizable liquid crystal | |
| Example compound I-2 | 17.4% by weight |
| Optically active compound C-1 | 2.6% by weight |
| 1,4-butandiol acetate | 79.28% by weight |
| Horizontal orientation agent LC-1-1 | 0.02% by weight |
| Irg-907, from Ciba Specialty Chemicals) | 0.5% by weight |
| DETX, from Nippon Kayaku Co., Ltd. | 0.2% by weight |

The optically anisotropic films R-4, G-4, and B-4 were formed in a similar manner to that of Example 1, except optically active compound C-1 was used instead of the optically active compound C-2 in the composition of coating liquid LC-1 for optically anisotropic film. Retardations of the optically anisotropic films obtained as above were measured in the same manner as that of Example 1. Results of the retardation measurements are shown in Table 6.

[Table 6]

| optically anisotropic film | Re(550) | Nz value |
|---|---|---|
| R-4 | 42 nm | 3.9 |
| G-4 | 44 nm | 4.6 |
| B-4 | 29 nm | 7.8 |

The results in Table 6 show that the optically anisotropic films R-4, G-4, and B-4 that were formed as above

are biaxial.
VA-LCD of Example 4 was produced in a similar manner to that of Example 1 except the optically anisotropic film was prepared by using composition of coating liquid LC-4 for optically anisotropic film.

(Evaluation of VA-LCD of Examples 1 to 4)

Black state at the viewing angle of direction angle 45 degree and polar angle 60 degrees, and color shift between direction angle 45 degrees and polar angle 60 degrees, and direction angle 180 degrees and polar angle 60 degrees were observed with respect to the thus-produced liquid crystal display devices of Examples 1 to 4.
As the result it was verified that a neutral black state was achieved in the liquid crystal display devices of Examples 1 to 4 in each of the front direction and viewing angle direction.

(Reference Example 1)

The optically anisotropic films R-1 c, G-1 c, and B-1c were formed in a similar manner to that of Example 1, except optically reactive chiral agent as follows that is described in GB Laid-open patent application No. 2314839 was used instead of the example compound C-2. As is clear from the following table, each of R-1c, G-1c, and B-1c has Nz values of above 8.0 and a low in-plane retardation Re, showing its poor biaxiality.
[Table 7]

| | Re(550) | Nz value |
|---|---|---|
| R-1c | 4 nm | 8.5 |
| G-1c | 5 nm | 9.1 |
| B-1c | 3 nm | 10 |

[Formula 25]

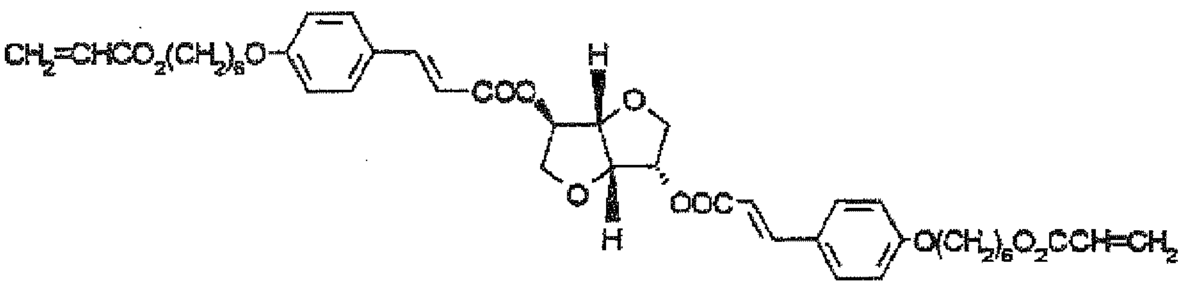

(Reference Example 2)

The optically anisotropic films R-2c, G-2c, and B-2c were formed in a similar manner to that of Example 1, except optically reactive chiral agent as follows that is described in WO03/027119 was used instead of the example compound C-2. As is clear from the following table, each of R-2c, G-2c, and B-2c has Nz values of above 8.0 and a low in-plane retardation Re, showing its poor biaxiality.
[Table 8]

| | Re(550) | Nz value |
|---|---|---|
| R-2c | 9 nm | 8.1 |
| G-2c | 10 nm | 8.5 |

(continued)

| | Re(550) | Nz value |
|---|---|---|
| B-2c | 8 nm | 9.2 |

[Formula 26]

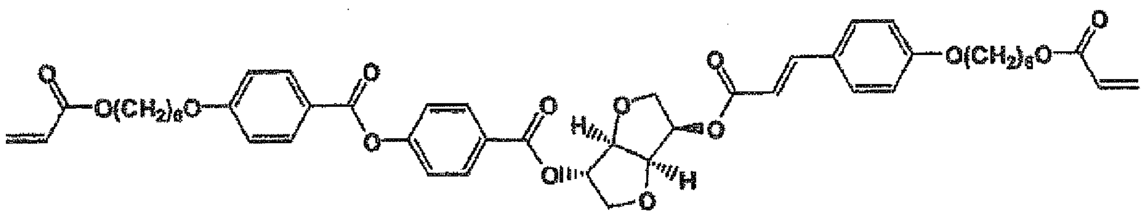

(Reference Example 3)

The optically anisotropic films R-3c, G-3c, and B-3c were formed in a similar manner to that of Example 1, except dichroic photoinitiator as follows that is described in Published Japanese Translation of PCT International Publication (WO2006/002765) for Patent Application (KOHYO) No. 2008-505369 was used instead of Irg-907, from Ciba Specialty Chemicals) and DETX, from Nippon Kayaku Co., Ltd. As is clear from the following table, each of R-2c, G-2c, and B-2c has Nz values of above 8.0 and a low in-plane retardation Re, showing its poor biaxiality.

[Table 9]

| | Re(550) | Nz value |
|---|---|---|
| R-2c | 3 nm | 8.6 |
| G-3c | 4 nm | 9.2 |
| B-3c | 2 nm | 10.1 |

[Formula 27]

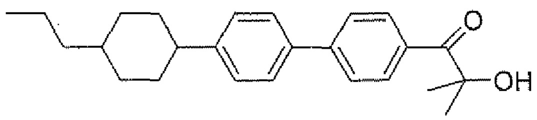

(Reference Example 4)

The optically anisotropic films R-4c, G-4c, and B-4c were formed in a similar manner to that of Example 1, except dichroic photoinitiator as follows that is described in Published Japanese Translation of PCT International Publication (WO2006/002765) for Patent Application (KOHYO) No. 2008-505369 was used instead of Irg-907, from Ciba Specialty Chemicals) and DETX, from Nippon Kayaku Co., Ltd and the preparation was conducted under nitrogen atmosphere. As is clear from the following table, each of R-4c, G-4c, and B-4c has Nz values of above 8.0 and a low in-plane retardation Re, showing its poor biaxiality.

[Table 10]

| | Re(550) | Nz value |
|---|---|---|
| R-3c | 12 nm | 8.5 |

(continued)

| | Re(550) | Nz value |
|---|---|---|
| G-3c | 13 nm | 8.3 |
| B-3c | 11 nm | 9.0 |

Hear resistance test:

Re(550) retention rate (variability) before and after the heating treatment at 230°C for 3 hours are obtained for the optically anisotropic films formed as above. Re(550) retention rate is a ratio of Re(550) after the heating treatment with respect to Re(550) before the heating treatment. Results of the Re(550) retention rate are shown in Table 11.
[Table 11]

| optically anisotropic film | Re(550) retention rate |
|---|---|
| R-4c | 62% |
| G-4c | 66% |
| B-4c | 67% |

As is shown in Table 11, the retardation of the optically anisotropic films formed in Reference Example 4 changed largely before and after the heating treatment.

(Example 5)

Preparation of Optically Anisotropic Film:

By using a substrate with black matrix formed thereon, which was prepared in a similar manner to that of Example 1, the coating liquid LC-1 for optically anisotropic film obtained as above was sprayed by using piezo head in the concave part where R layer surrounded by black matrix (light blocking wall) was intended to be formed, and heated and dried at 140°C for two minutes. Immediately after being matured at 65°C for two minutes, the layer was irradiated by a polarized UV light (illuminance=10 $mW/cm^2$, illumination energy=400 $mJ/cm^2$). The layer was further matured by heating at 130°C to form an optically anisotropic film R-5 having thickness of 2.0 μm.
In a similar manner, optically anisotropic films G-5 and B-5 were formed in the micro regions where G-layer and B-layer were intended to be formed, respectively. By using the coating liquid LC-1 for optically anisotropic film, while maintaining the amount for the spray the same, the condition of the irradiation by a polarized UV light was changed as follows:

G-5: illuminance=50 $mW/cm^2$, illumination energy=400 $mJ/cm^2$,
B-5: illuminance=20 $mW/cm^2$, illumination energy=400 $mJ/cm^2$.

The retardations of the optically anisotropic films thus obtained were measured in the same manner as that of Example 1. The measurement result of the retardation is shown in Table 12.
[Table 12]

| optically anisotropic film | Re(550) | Nz value |
|---|---|---|
| R-5 | 54 nm | 3.4 |
| G-5 | 46 nm | 3.8 |
| B-5 | 28 nm | 5.6 |

The results in Table 12 show that the optically anisotropic films R-5, G-5, and B-5 that were formed as above are biaxial.

Hear resistance test:

Re(550) retention rate before and after the heating treatment at 230 °C for 3 hours are obtained for the optically anisotropic films formed as above. Results of the Re(550) retention rate are shown in Table 13.

[Table 13]

| optically anisotropic film | Re(550) retention rate |
|---|---|
| R-5 | 83% |
| G-5 | 86% |
| B-5 | 88% |

By using the optically anisotropic films obtained as above, the formation of a color filter, formation of transparent electrode, formation of alignment layer and liquid crystal cell were carried out in a similar manner to that of Example 1. VA-LCD of Example 5 was produced in a similar manner to that of Example 1 by using thus obtained liquid crystal cell.

(Example 6)

The optically anisotropic films R-6, G-6, and B-6 were formed in a similar manner to that of Example 5, except the condition of the irradiation by a polarized UV light was changed as follows:

R-6: illuminance=20 $mW/cm^2$, illumination energy=200 $mJ/cm^2$,
G-6: illuminance=100 $mW/cm^2$, illumination energy=200 $mJ/cm^2$,
B-6: illuminance=300 $mW/cm^2$, illumination energy=100 $mJ/cm^2$

The retardations of the optically anisotropic films thus obtained were measured in the same manner as that of Example 1. The measurement results of the retardation are shown in Table 14.
[Table 14]

| optically anisotropic film | Re(550) | Nz value |
|---|---|---|
| R-6 | 52 nm | 3.5 |
| G-6 | 44 nm | 3.9 |
| B-6 | 25 nm | 5.8 |

The results in Table 14 show that the optically anisotropic films R-6, G-6, and B-6 that were formed as above are biaxial.
By using the optically anisotropic films obtained as above, the formation of a color filter, formation of transparent electrode, formation of alignment layer and liquid crystal cell were carried out in a similar manner to that of Example 1. VA-LCD of Example 6 was produced in a similar manner to that of Example 1 by using thus obtained liquid crystal cell.

(Evaluation of VA-LCD of Examples 5 and 6)

Black state at the viewing angle of direction angle 45 degree and polar angle 60 degrees, and color shift between direction angle 45 degrees and polar angle 60 degrees, and direction angle 180 degrees and polar angle 60 degrees were observed with respect to the thus-produced liquid crystal display devices of Examples 5 and 6.
As the result it was verified that a neutral black state was achieved in the liquid crystal display devices of Examples 5 and 6 in each of the front direction and viewing angle direction.

(Example 7)

Preparation of Optically Anisotropic Film

(Preparation of Coating Liquid LC-11 for Optically Anisotropic Film)

The composition below was prepared, filtered through a polypropylene filter having a pore size of 0.2 μm, and the filtrates were used as coating liquid LC-11 for forming an optically anisotropic film.
Composition of Coating Liquid LC-11 for Optically Anisotropic film:

| | |
|---|---|
| Polymerizable liquid crystal | |
| Example compound I-2 | 17.4% by weight |
| Chiral agent | |
| Example compound C-3 | 2.6% by weight |
| Methylethyl ketone (boiling point 80°C) | 79.28% by weight |
| horizontal orientation agent LC-1-1 | 0.02% by weight |
| Irg-907, (Ciba Specialty Chemicals) | 0.5% by weight |
| DETX, from Nippon Kayaku Co., Ltd. | 0.2% by weight |

$T_{N1}$ of Coating Liquid LC-11 for Optically Anisotropic Film and Measurement

The temperatures at which the liquid crystal composition of the above composition of coating liquid LC-11 for optically anisotropic film exhibits phase transition from cholesteric phase to isotropic phase ($T_{N1}$) and from crystal phase to cholesteric phase ($T_{CN}$) were determined by observations with polarized microscope (NIKON ECLIPSE LV100POL) on a hot stage equipped with a temperature controlling device (METTLER TOLED FP82HT Hot Stage). $T_{N1}$ of the coating liquid LC-11 for optically anisotropic film was 85°C and $T_{CN}$ was 40°C.
As the optically anisotropic film R-11 for R layer, the coating liquid LC-11 for optically anisotropic film obtained as above was sprayed by using piezo head in the concave part where R layer surrounded by black matrix (light blocking wall) was intended to be formed, and heated and dried at 90°C for two minutes. Immediately after being matured at 65°C for two minutes, the layer was irradiated by a polarized UV light (illuminance=200 mW/$cm^2$, illumination energy=200 mJ/$cm^2$). The layer was further matured by heating at 130°C to form an optically anisotropic film R-11 having thickness of 2.8 μm.
In a similar manner, optically anisotropic films G-11 and B-11 were formed in the micro regions where G-layer and B-layer were intended to be formed, respectively. By using the coating liquid LC-11 for optically anisotropic film, the amount for the spray was changed between the layers to form optically anisotropic films G-11 and B-11 in the thicknesses of 2.9 μm and 2.6 μm, respectively.
In this example, each coating liquid for optically anisotropic film was sprayed in the concave part corresponding to the desired R, G, or B to form each of R, G and B pixel, by controlling the delivery speed and the driving frequency.

Measurement of Retardation:

In-plane retardation Re(λ) at an measurement wavelength λ and retardation while inclining the sample by ±40° using the slow axis as the axis of rotation were measured using a fiber-type spectrometer (KOBRA 21ADH or WR manufactured by Oji Scientific Instruments) based on the parallel Nicol method. Further, Rth(λ) and Nz value were calculated. The measurement wavelength λ was set at 611 nm, 545 nm, and 435 nm for R, G, and B, respectively, and measurements of the retardation were conducted.
The retardation of the optically anisotropic film was obtained by calibration with data of transmission of the substrate without optically anisotropic film, which were measured beforehand. Results of the retardation measurements are shown in Table 15.
[Table 15]

| optically anisotropic film | Re(550) | Nz value |
|---|---|---|
| R-11 | 48 nm | 3.1 |
| G-11 | 51 nm | 3.7 |

(continued)

| optically anisotropic film | Re(550) | Nz value |
|---|---|---|
| B-11 | 36 nm | 5.4 |

(Example 8)

By using the coating liquid LC-11 for optically anisotropic film, optically anisotropic films R-12, G-12, and B-12 were formed in a similar manner to that of Example 7, except $T_1$ was set at 140°C instead of 90°C. The retardation of the optically anisotropic film thus obtained was measured in a similar manner to that of Example 7. Results of the retardation measurements are shown in Table 16.

[Table 16]

| optically anisotropic film | Re(550) | Nz value |
|---|---|---|
| R-12 | 43 nm | 3.6 |
| G-12 | 45 nm | 4.4 |
| B-12 | 30 nm | 6.1 |

(Example 9)

By using the coating liquid LC-11 for optically anisotropic film, optically anisotropic films R-13, G-13, and B-13 were formed in a similar manner to that of Example 7, except $T_2$ was set at 50°C instead of 65°C. The retardation of the optically anisotropic film thus obtained was measured in a similar manner to that of Example 7. Results of the retardation measurements are shown in Table 17.

[Table 17]

| optically anisotropic film | Re(550) | Nz value |
|---|---|---|
| R-13 | 45 nm | 3.4 |
| G-13 | 47 nm | 4.2 |
| B-13 | 32 nm | 5.9 |

(Comparative Example 1)

By using the coating liquid LC-11 for optically anisotropic film, optically anisotropic films R-11c, G-11c, and B-11c were formed in a similar manner to that of Example 7, except $T_1$ was set at 80°C instead of 90°C. The retardation of the optically anisotropic film thus obtained was measured in a similar manner to that of Example 7. Results of the retardation measurements are shown in Table 18. As is clear from the following table, each of R-11c, G-11c, and B-11c has Nz values of above 8.0 and a low in-plane retardation Re, showing its poor biaxiality.

[Table 18]

| optically anisotropic film | Re(550) | Nz value |
|---|---|---|
| R-11c | 10 nm | 8.3 |
| G-11c | 15 nm | 8.1 |
| B-11c | 13 nm | 8.7 |

(Comparative Example 2)

By using the coating liquid LC-11 for optically anisotropic film, optically anisotropic films were formed in a similar

manner to that of Example 7, except $T_1$ was set at 160°C instead of 90°C. Selective reflection was observed in the visible region for the retardation layer thus obtained.

(Comparative Example 3)

By using the coating liquid LC-11 for optically anisotropic film, optically anisotropic films were formed in a similar manner to that of Example 7, except $T_2$ was set at 30°C instead of 65°C. White turbidity due to partial crystallization was observed in the retardation layer thus obtained.

Industrial Applicability of the Invention

The present invention provides a novel optically anisotropic film useful for optical compensation of a liquid crystal display device. Further, the present invention provides a method for producing the above optically anisotropic film in an efficient manner, and a liquid crystal cell and a liquid crystal display device using the above optically anisotropic film.

Explanation of Numerical numbers

**[0211]**

11 transparent substrate;
12 black matrix (partition wall);
13 optically anisotropic film;
14 color filter layer;
21 target substrate for transfer;
22 black matrix (partition wall);
23 color filter layer;
24 non-patterned optically anisotropic film;
25 transparent electrode layer;
26 alignment layer;
27 patterned optically anisotropic film;
31 liquid crystal;
32 TFT;
33 polarizing layer;
34 cellulose acetate film (protective film for polarizing plate);
35 cellulose acetate film or optical compensation film;
36 polarizing plate;
37 liquid crystal cell.

## Claims

1. An optically anisotropic film of distorted twisted spiral structure, which is formed by irradiation with polarized light to a liquid-crystalline composition comprising a liquid-crystalline compound and at least one optically active compound the torsional force of which is changed by light.

2. The optically anisotropic film according to claim 1, **characterized in that** an in-plane slow axis is present in the direction parallel to the polarized light irradiated.

3. The optically anisotropic film according to claim 1 or 2, **characterized by** having a reflection wavelength of less than 400 nm and essential transparency to light with wavelengths of 380 to 780 nm.

4. The optically anisotropic film according to any one of claims 1 to 3, **characterized in that** the optically active compound is a compound having a photoisomerizing group or a photodimerizing group.

5. The optically anisotropic film according to any one of claims 1 to 4, **characterized in that** the liquid-crystalline composition comprises at least one achiral liquid-crystalline compound.

6. The optically anisotropic film according to claim 5, **characterized in that** the at least one achiral liquid-crystalline compound is a compound having no photoisomerizing group or a photodimerizing group.

7. The optically anisotropic film according to claim 5 or 6, **characterized in that** the ratio of the at least one optically active compound with respect to the at least one achiral liquid-crystalline compound is 10 to 30 weight %.

8. The optically anisotropic film according to any one of claims 1 to 7, **characterized in that** the at least one optically active compound has cinnamate group, stilbene group, or azobenzene group.

9. The optically anisotropic film according to any one of claims 1 to 8, **characterized in that** the at least one optically active compound is a compound represented by the following general formula (1a) or (1b):

[Formula 28]

(1a)

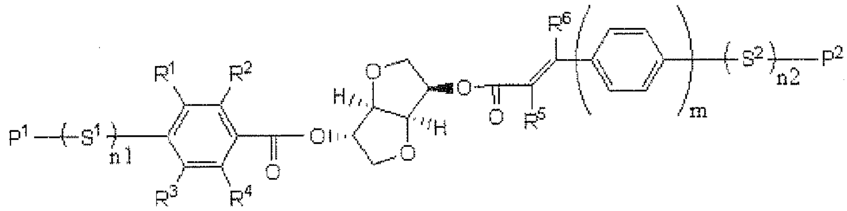

(1b)

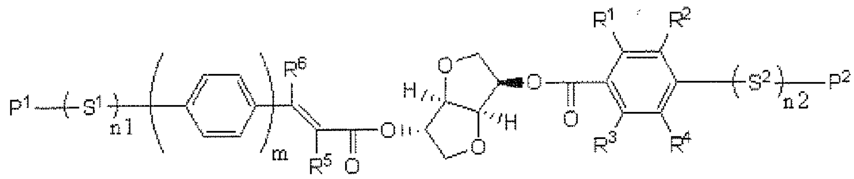

wherein $R^1$, $R^2$, $R^3$ and $R^5$ independently represents hydrogen atom or a substituent; each of $R^5$ and $R^6$ independently represents hydrogen atom, a substituted or unsubstituted alkyl group, or CN group; each of $P^1$ and $P^2$ independently represents a substituted or unsubstituted alkyl or aryl group; each of $S^1$ and $S^2$ independently represents a divalent linking group; m represents an integer of from 2 to 4, and each of n1 and n2 represents an integer of from 0 to 4.

10. The optically anisotropic film according to any one of claims 1 to 9, **characterized in that** the at least one optically active compound is a polymer comprising at least one repeating unit having a partial structure represented by any one of the following general formulas (3a) to (3d) in a side chain:

[Formula 29]

(3a) 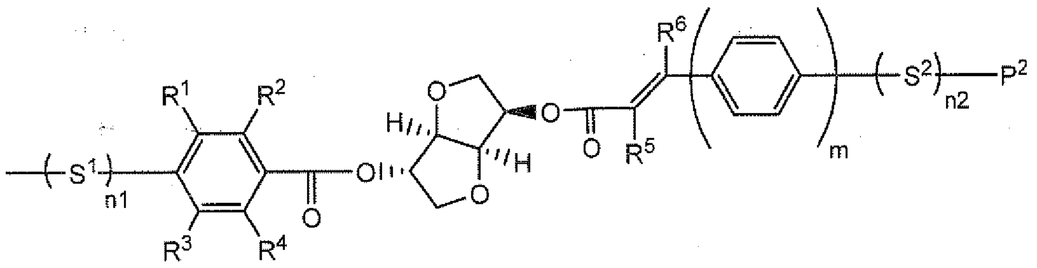

(3b) 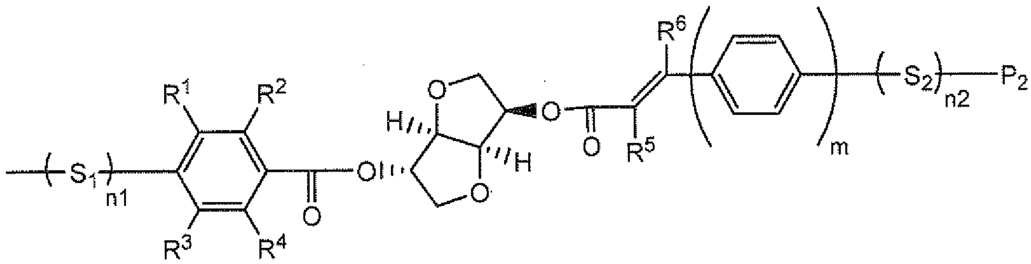

(3c) 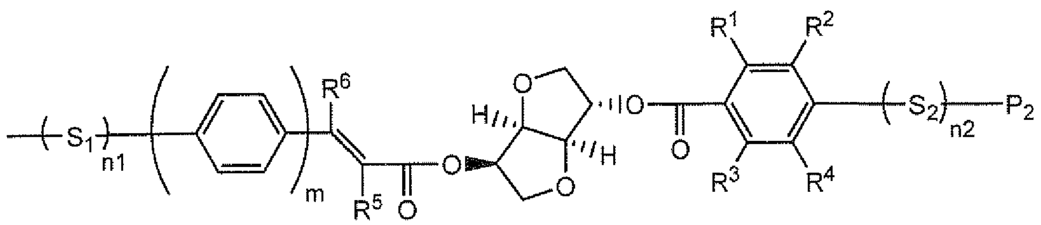

(3d) 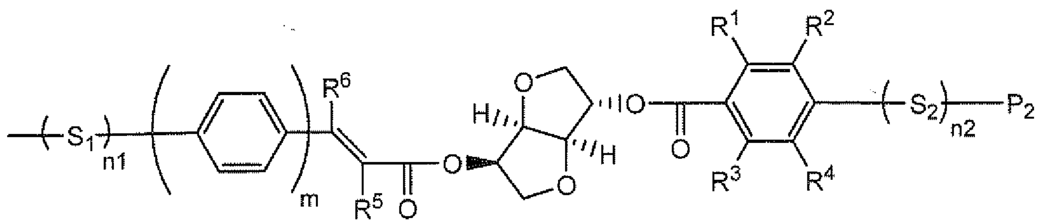

wherein each of $R^1$, $R^2$, $R^3$, and $R^5$ independently represents a hydrogen atom or a substituent; each of $R^5$ and $R^6$ independently represents a hydrogen atom, a substituted or unsubstituted alkyl group, or a CN group; each of $P^1$ and $P^2$ independently represents a substituted or unsubstituted alkyl or aryl group; each of $S^1$ and $S^2$ independently represents a divalent linking group; and m represents an integer of from 2 to 4, and each of n1 and n2 represents an integer of from 0 to 4.

11. The optically anisotropic film according to claim 10, **characterized in that** the at least one repeating unit is a repeating unit represented by any one of the following general formulas (3a') to (3e'):

[Formula 30]

(3a')

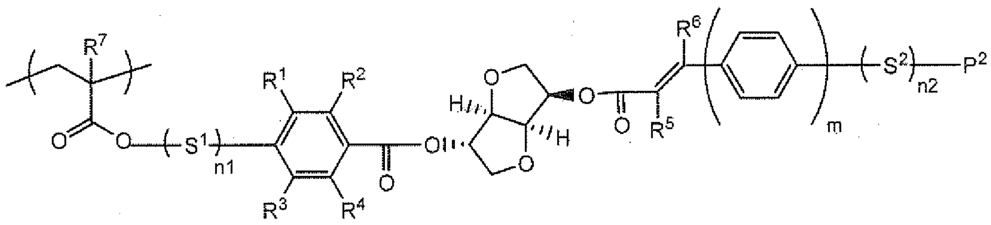

(3b')

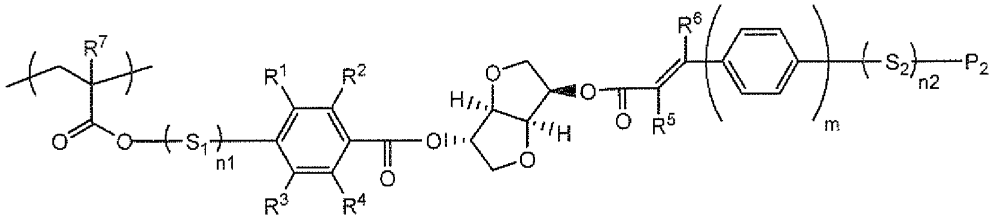

(3d')

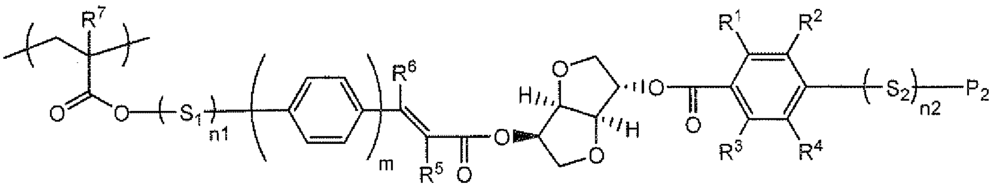

(3e')

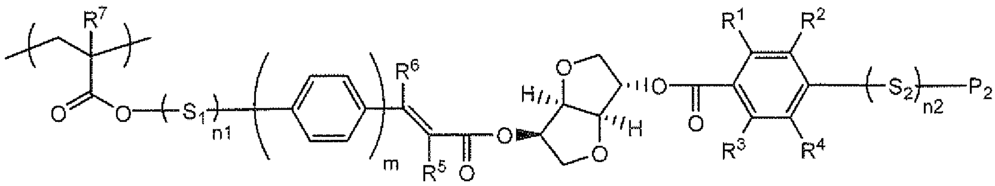

wherein symbols identical to those in formulas (3a) to (3d) are identically defined, respectively, and $R^7$ represents hydrogen atom or methyl group.

**12.** The optically anisotropic film according to claim 10 or 11 **characterized in that** the polymer further comprises a repeating unit having at least one of the partial structures represented by the following formula (4) in a side chain:

[Formula 31]

(4)

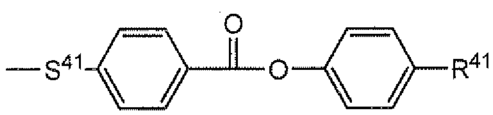

wherein $S^{41}$ represents a divalent linking group and $R^{41}$ represents hydrogen atom or a substituent.

**13.** The optically anisotropic film according to any one of claims 10 to 12 **characterized in that** the polymer is a polymer comprising at least one repeating unit having a partial structure represented by any one of the formulas (3a) to (3d) and at least one repeating unit represented by the following general formula (4a):

[Formula 32]

(4a)

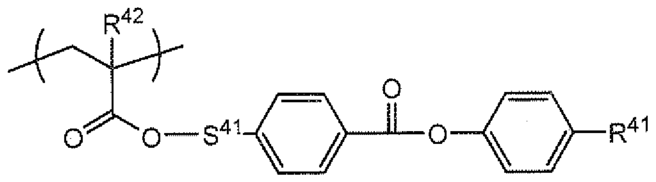

wherein symbols identical to those in formula (4) are identically defined; $R^{42}$ represents hydrogen atom or methyl group.

**14.** A liquid crystal cell substrate, which comprises a substrate and the optically anisotropic film according to any one of claims 1 to 13 on the substrate.

**15.** A liquid crystal display device comprising the optically anisotropic film according to any one of claims 1 to 13.

**16.** The liquid crystal display device according to claim 15, which is a VA-mode liquid crystal display device.

**17.** The liquid crystal display device according to claim 15 or 16, which comprises the optically anisotropic film in the liquid crystal cell.

**18.** The liquid crystal display device according to claim 17 wherein the optically anisotropic film is formed in each of the regions corresponding to individual pixels

**19.** A method of producing an optically anisotropic film of distorted twisted spiral structure, which comprises the following (1) and (2), in this order:

(1) heating a liquid-crystalline composition comprising at least one optically active compound the torsional force of which is changed by light to temperature $T_1$;
(2) irradiating the liquid-crystalline composition with polarized light at temperature $T_2$, provided that temperatures $T_1$ and $T_2$ satisfy the following relations (XI) and (XII):

$$T_{NI} < T_1 < 150^{\circ}C \qquad (XI)$$

$$T_{CN} < T_2 < T_{NI} \qquad (XII)$$

wherein $T_{NI}$ is the temperature at which the liquid-crystalline composition phase transitions from a cholesteric phase to an isotropic phase, and $T_{CN}$ is the temperature at which the liquid-crystalline composition phase transitions from a crystal phase to a cholesteric phase.

**20.** The method of producing an optically anisotropic film according to claim 19, which does not comprise irradiation with non-polarized light prior to the irradiation with polarized light.

**21.** A method of producing a liquid crystal cell substrate, which comprises the following (11) to (13), in this order:

(11) applying a liquid-crystalline composition comprising at least one optically active compound the torsional force of which is changed by light on a substrate;
(12) heating the liquid-crystalline composition to temperature $T_1$, ;
(13) irradiating the liquid-crystalline composition with polarized light at temperature $T_2$, provided that temperatures $T_1$ and $T_2$ satisfy the following relations (XI) and (XII):

$$T_{NI} < T_1 < 150^{o}C \qquad (XI)$$

$$T_{CN} < T_2 < T_{NI} \qquad (XII)$$

wherein $T_{NI}$ is the temperature at which the liquid-crystalline composition phase transitions from a cholesteric phase to an isotropic phase, and $T_{CN}$ is the temperature at which the liquid-crystalline composition phase transitions from a crystal phase to a cholesteric phase.

[Fig.1]

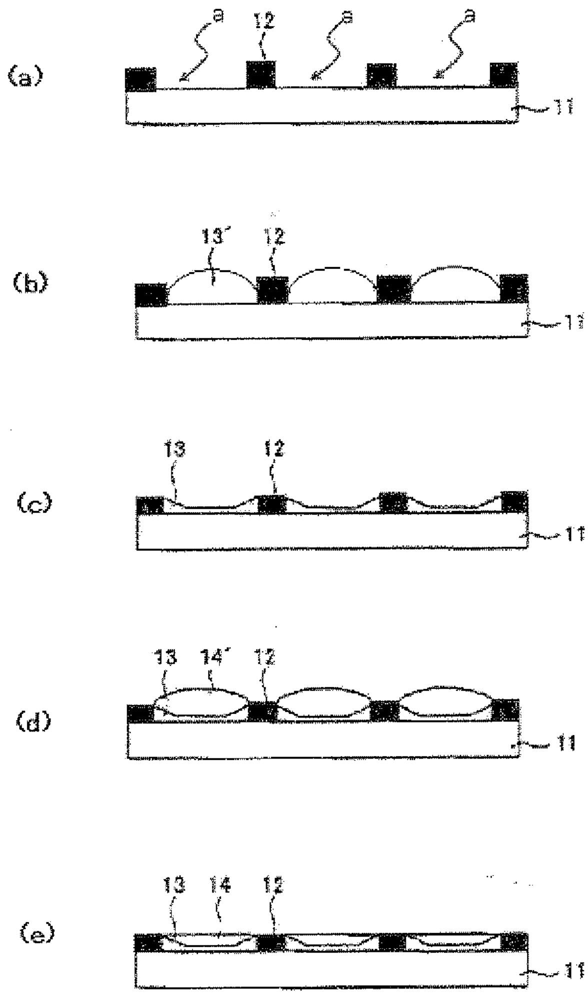
(a)
a
12
a
a
11
(b)
13'
12
11
(c)
13
12
11
(d)
13
14'
12
11
(e)
13
14
12
11

[Fig.2]

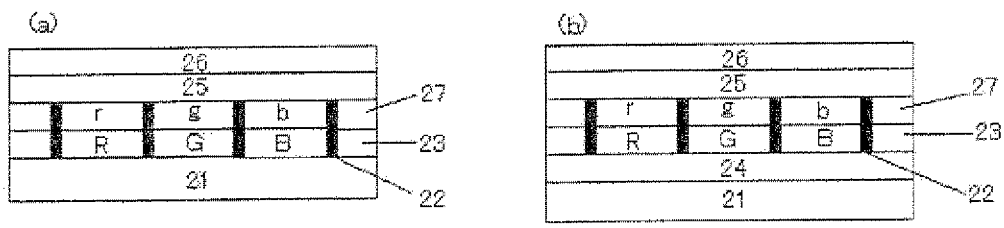
(a)
26
25
r
g
b
R
G
B
27
23
21
22
(b)
26
25
r
g
b
R
G
B
24
21
27
23
22

[Fig.3]

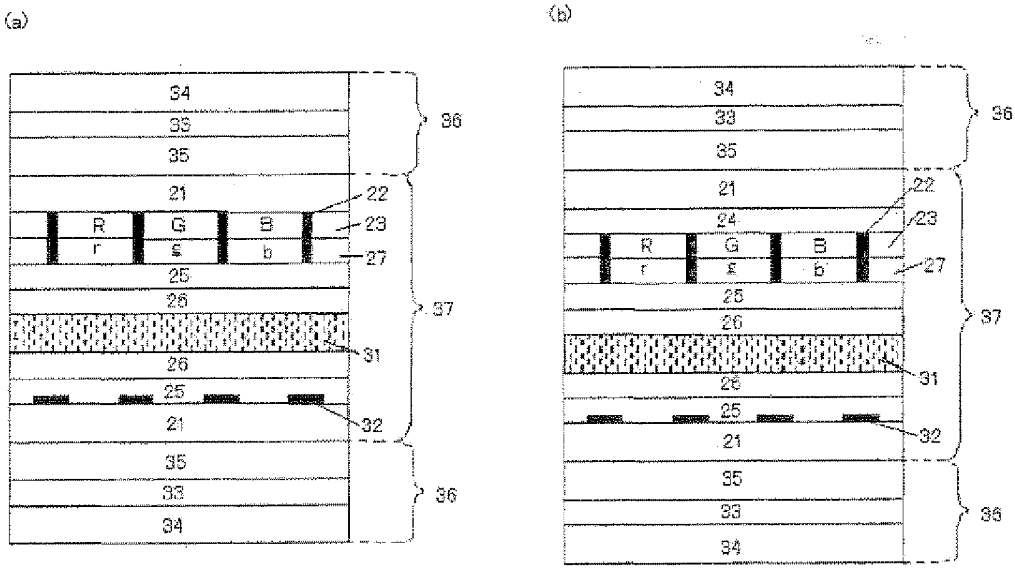

**INTERNATIONAL SEARCH REPORT**

International application No.
PCT/JP2009/003289

A. CLASSIFICATION OF SUBJECT MATTER
G02B5/30(2006.01)i, C09K19/38(2006.01)i, C09K19/54(2006.01)i, G02F1/1335(2006.01)i, G02F1/13363(2006.01)i

According to International Patent Classification (IPC) or to both national classification and IPC

B. FIELDS SEARCHED

Minimum documentation searched (classification system followed by classification symbols)
G02B5/30, G02F1/1335, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2003-306490 A (Fuji Photo Film Co., Ltd.), 28 October, 2003 (28.10.03), Full text; all drawings & US 2004/0019228 A1 | 1-21 |
| A | JP 2003-306491 A (Fuji Photo Film Co., Ltd.), 28 October, 2003 (28.10.03), Full text; all drawings (Family: none) | 1-21 |
| A | JP 2006-504991 A (Koninklijke Philips Electronics N.V.), 09 February, 2006 (09.02.06), Full text & US 2006/0040068 A1 & EP 1561134 A & WO 2004/040339 A1 & KR 10-2005-0065655 A & CN 1708706 A | 1-21 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 September, 2009 (28.09.09) | 06 October, 2009 (06.10.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/003289

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-505577 A (Koninklijke Philips Electronics N.V.), 24 February, 2005 (24.02.05), Full text; all drawings & US 2004/0232383 A1 & EP 1432716 A & WO 2003/027119 A1 & CN 1556812 A | 1-21 |
| A | JP 2002-179633 A (Fuji Photo Film Co., Ltd.), 26 June, 2002 (26.06.02), Full text; all drawings (Family: none) | 1-21 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004037837 A
- WO 2006002765 PCT
- WO 2008505369 A
- WO 2006002766 PCT
- WO 2008505370 A
- JP 2003306490 A
- JP 2003306491 A
- JP HEI11513019 B
- WO 9700600 A
- WO 2006104252 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- JP 9323420 A
- EP A277703 A
- EP A278590 A
- JP 11243821 A
- JP 3255107 B
- JP 6214116 A
- US 5583679 A
- US 5646703 A
- GE 3911620 A1
- JP 10054982 A
- US 5805253 A
- WO 9637804 A
- JP 9026572 A
- JP 2866372 B
- GB 2314839 A
- WO 03027119 A
- WO 2006002765 A


### Non-patent literature cited in the description


- Polymer Handbook. JOHN WILEY & SONS, INC
- Dictionary of Physics and Chemistry. Iwanami Shoten, 1982, 449
- Experimental Methods in Polymer Chemistry. The Society of Polymer Science. Tokyo Kagaku Dojin, 1981
- Kobunshi Butsuri-Soten'i Dainamikusu. Iwanami Shoten, Publishers, 1992, 2
- *Tetrahedron Lett.,* 2002, vol. 43, 6793